# EUROPÄISCHE PATENTSCHRIFT

(11) **EP 2 100 234 B1**
(45) Veröffentlichungstag und Bekanntmachung des Hinweises auf die Patenterteilung: **27.07.2011**
(21) Anmeldenummer: 06724875.7
(22) Anmeldetag: 23.02.2006
(51) Int. Cl.: G06F 17/30

(54) **SYSTEM UND VERFAHREN ZUR BENUTZERGESTEUERTEN MULTIDIMENSIONALEN NAVIGATION UND/ODER THEMENBASIERTEN AGGREGATION UND/ODER ÜBERWACHUNG VON MULTIMEDIADATEN**
SYSTEM AND METHOD FOR USER-CONTROLLED, MULTI-DIMENSIONAL NAVIGATION AND/OR SUBJECT-BASED AGGREGATION AND/OR MONITORING OF MULTIMEDIA DATA
SYSTEME ET PROCEDE POUR LA NAVIGATION MULTIDIMENSIONNELLE COMMANDEE PAR L'UTILISATEUR ET/OU AGREGATION THEMATIQUE ET/OU SURVEILLANCE DE DONNEES MULTIMEDIA

(43) Veröffentlichungstag der Anmeldung: 16.09.2009
(73) Patentinhaber: Netbreeze GmbH, 8600 Dübendorf (CH)
(72) Erfinder: KELLER, Leo, CH-8427 Rorbas-Freienstein (CH); RÜF, Francois, CH-8057 Zürich (CH)
(74) Vertreter: Braun, André jr.
(86) Internationale Anmeldenummer: PCT/EP2006/060235
(87) Internationale Veröffentlichungsnummer: WO 2007/095997

(56) Entgegenhaltungen:
- US-A- 5 832 494
- JAU-YUEN CHEN ET AL: "Hierarchical Browsing and Search of Large Image Databases" IEEE TRANSACTIONS ON IMAGE PROCESSING, IEEE SERVICE CENTER, PISCATAWAY, NJ, US, Bd. 9, Nr. 3, März 2000 (2000-03), XP011025536 ISSN: 1057-7149
- CHIH-SHYANG CHANG ET AL: "Supporting Conceptual and Neighborhood Queries on the World Wide Web" IEEE TRANSACTIONS ON SYSTEMS, MAN, AND CYBERNETICS: PART C: APPLICATIONS AND REVIEWS, IEEE SERVICE CENTER, PISCATAWAY, NJ, US, Bd. 28, Nr. 2, Mai 1998 (1998-05), XP011057076 ISSN: 1094-6977

## Beschreibung

Die Erfindung betrifft ein System und ein Verfahren zur benutzergesteuerten multidimensionalen Navigation und/oder themenbasierten Aggregation von Multimediadaten. In einem Datenspeicher werden ein oder mehrere verknüpfbare Suchbegriffe abgespeichert, wobei eine Recheneinheit über ein Netzwerk auf mit Quelldatenbanken verbundene Netzwerknodes zugreift und Daten der Quelldatenbanken basierend auf den ein oder mehrere verknüpfbare Suchbegriffen selektiert werden. Die Erfindung betrifft insbesondere ein System und Verfahren zum schnellen Navigieren und visuellen Erfassen bzw. Zugreifen auf die Multimediadaten.

Das weltweite Backbone-Netzwerk, auch als Internet oder World Wide Web bekannt umfasst Millionen von zugreifbaren Seiten, Dokumenten oder andere Datenfiles mit Informationen. Ohne Übertreibung darf gesagt werden, dass dieses riesige Netzwerk aus dezentralisiert angeordneten Datenbanken heute zweifelsohne zu den wichtigsten Quellen zur Informationsbeschaffung in Industrie, Wissenschaft und Technik gehört. Die Tatsache, dass heute über dieses Netz auf gigantische Datenmengen zugegriffen werden kann, in einem Ausmass, wie es bis vor 10 Jahren noch kaum vorzustellbar war, ist gleichzeitig eine ungeheure technische Herausforderung. Denn trotz all den daraus entstehenden Vorteilen ergibt sich durch die ungeheuren Datenmengen auch die Schwierigkeit, wirklich relevante Daten in dieser riesigen Datenmenge aufzufinden. Search-Engines, wie z.B. die bekannten Internet-Search-Engines mit z.B. dem bekannten Altavista-Engine als wortbasierende Suchmaschine oder z.B. der Yahoo-Engine als topicbasierende Suchmaschine, machen die Vielzahl der dezentralisierten Datenquellen für den Benutzer erst nutzbar, da ohne solche Hilfsmittel die Aussicht, dass möglichst viele der relevanten Daten wirklich gefunden werden, drastisch sinkt. Es kann gesagt werden, dass das Internet ohne Search-Engines wie ein Kraftfahrzeug ohne Motor ist. Dies zeigt sich insbesondere in der statistischen Tatsache, dass die Benutzer des Internets mehr Online-Zeit bei Search-Engines verbringen, als irgendwo sonst. Trotz allen Fortschritten auf diesem Gebiet gibt die im Stand der Technik verfügbare Search-Engine-Technologie dem Benutzer jedoch häufig keine wirklich zufrieden stellenden Antworten. Als Beispiel sei angenommen, ein Benutzer möchte Informationen, z.B. zum Auto Model-Typ Fiat Uno finden, z.B. in Zusammenhang mit einer Haftungsklage einer Produktehaftung in Bezug auf ein fehlerhaftes Design mit technischen Folgen. Allgemeine Search-Engines werden zu diesem Thema typischerweise eine Vielzahl von irrelevanten Links zum Stichwort "Uno" oder "Fiat Uno" ergeben, da die Search-Engines den Context (in diesem Fall den rechtlich-juristischen Context), in welchem der Suchterm gefunden wird, nicht erkennen können. Dabei hilft auch häufig eine mögliche Kombination von Suchbegriffen nur wenig. Einer der Gründe dafür kommt daher, dass die Internet-Search-Engines üblicherweise die Strategie des "Jedes Dokument ist relevant" verfolgen, weshalb sie versuchen, jedes zugreifbare Dokument zu erfassen und zu indexieren. Ihre Funktionsweise basiert immer auf dieser nicht editierten Auswahl von Dokumenten. Ein weiterer Nachteil der Search-Engines des Standes der Technik ist, dass die Hierarchie der gefundenen Dokumente durch den Anbieter leicht manipuliert werden kann (URL, Titel, Häufigkeit im Inhalt, Meta-Tags etc.), was ein verzehrtes Bild der gefunden Dokumente ergibt. Eine Klassifizierung der Dokumente durch den Provider ist vielleicht für einzelne wenige Gebiete möglich. Wegen der ungeheuren Menge an Daten und da die Informationen auf dem Netz schnell wechseln können (News-Groups, Portale etc.), ist es für einen Provider jedoch unmöglich, alle relevanten Dokumente zu allen aufkommenden Themen unmittelbar zu klassifizieren oder bezüglich ihres Inhaltes zu interpretieren. Noch schwieriger wird die Sachlage, wenn anstelle von konkreten Themen, allgemeine Stimmungstendenzen, Meinungstendenzen oder Stimmungsschwankungen der Benutzer des Netzwerkes erfasst werden sollen. Z.B. kann es für eine Firma oder Industrie (beispielsweise Tabak, Chemie etc.) überlebenswichtig sein, frühzeitig die Möglichkeiten einer Class Action (USA) oder einer Haftungsklage gegen sich anhand von publizierten Dokumenten im Internet zu erfassen und entsprechende Vorkehrungen zu treffen. Gerade für solche Beispiele können die traditionellen Search-Engines nicht oder nur partiell eingesetzt werden. Insbesondere erlauben sie keine effektive Real-Time-Überwachung, was in einem solchen Fall notwendig sein kann.

Selbst wenn aber die oben genannten Nachteile durch einen Search-Engine halbwegs befriedigend gelöst und die Dokumente hierarchisch nach ihrer Relevanz zu einem oder mehreren Suchtopics erfasst werden könnte, ergibt sich meistens aus der Vielzahl der gefundenen Dokumenten mit gleicher oder ähnlicher Relevanz für den Benutzer eine fast unlösbare Aufgabe, bei einem einfachen Listing oder Ranking, wie das heute üblich ist, den Überblick zu bewahren. Wie erwähnt kann die rechzeitige relevante Informationsbeschaffung, -erfassung und -erkennung in der Industrie heute eine Überlebensfrage darstellen. Es stellt sich somit überhaupt die Frage, ob eine relevanzbasierte Erkennung, so gut sie auch sein mag, bei den heutigen Datenmengen noch ausreicht, um dem Benutzer ein genügend sinnvolles Instrument zu sein.

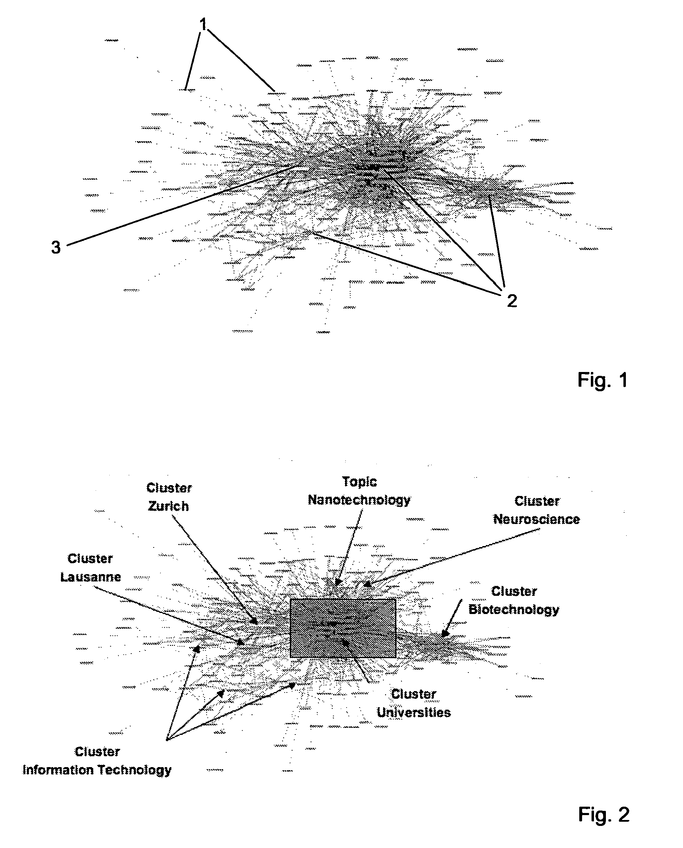

An dieser Stelle ist es wichtig zu verstehen, dass der Term "Search-Engine" im Stand der Technik üblicherweise für verschiedene Typen von Suchmaschinen gebraucht wird. Die verfügbaren Search-Engines lassen sich grob in vier Kategorien unterteilen: Robots/Crawlers, Metacrawlers, Suchkataloge mit Suchmöglichkeiten und Kataloge oder Linksammlungen. Figur 1 zeigt die Funktionsweise von Robots/Crawlers. Search-Robots oder Crawlers zeichnen sich durch einen Prozess aus (d.h. den Crawler), welcher sich durch das Netzwerk 70, hier das Internet 701-704, von Netzwerk-Node 73 zu Netzwerk-Node 73 bzw. von Web-Site 73 zu Web-Site 73 bewegt (Pfeil 71) und dabei den Inhalt jedes Web-Dokumentes, welches er findet, an seinen Host-Rechner 72 zurückschickt. Der Host-Rechner 72 indexiert die durch den Crawler geschickten Web-Dokumente 722 und speichert die Information in einer Datenbank 721 ab. Jede Suchanfrage (Request) durch einen Benutzer greift auf die Informationen der Datenbank 721 zu. Die Crawlers des Standes der Technik betrachten normalerweise jede Information als relevant, weshalb alle irgendwo gefundenen Web-Dokumente durch den Host-Rechner 72 indexiert werden. Beispiele solcher Robots/Crawlers sind u.a. Google^{™}, Altavista^{™} und Hotbot^{™}. Figur 2 illustriert die sog. Metacrawlers. Metacrawlers unterscheiden sich von den Robots/Crawlers durch die Möglichkeit, mittels einer einzigen Sucheinrichtung 82 zu suchen, wobei die Antwort zusätzlich durch eine Vielzahl von weiteren Systemen 77 des Netzes 75 erzeugt wird. Der Metacrawler dient somit als ein Front-End zu einer Vielzahl von weiteren Systemen 77. Die Antwort auf einen Suchrequest von einem Metacrawler wird typischerweise durch die Anzahl seiner weiteren Systeme 77 begrenzt. Beispiele von Metacrawlers sind u.a. MetaCrawler^{™}, LawCrawler^{™} und LawRunner^{™}_{.}

Kataloge mit oder ohne Suchmöglichkeiten zeichnen sich durch eine spezielle Auswahl von Links aus, welche von Hand strukturiert und/oder organisiert und in einer entsprechenden Datenbank abgespeichert werden. Im Fall eines Kataloges mit Suchmöglichkeiten wird bei einem Suchrequest die manuell gespeicherte Information durch das System nach den gewünschten Suchtermen abgesucht. Im Fall eines Kataloges ohne Suchmöglichkeiten muss der Benutzer die gewünschte Information selbst aus der Liste der gespeicherten Links suchen, indem er z.B. manuell durch die Liste klickt oder scrollt. Im letzteren Fall entscheidet der Benutzer selbst, welche Information aus der Liste ihm relevant und welche ihm weniger relevant erscheint. Kataloge sind natürlicherweise durch das Leistungsvolumen und die Prioritäten des/der Editor(en) begrenzt. Beispiele solcher Kataloge sind u.a. Yahoo!^{™} und FindLaw^{™}. Kataloge fallen unter die Kategorie der Portale und/oder Vortale. Portale und bis zu einem gewissen Mass z.B. auch proprietäre Datenbanken wie FindLaw.com^{™} oder WestLaw.com^{™} versuchen das Problem auf unterschiedliche Weise zu lösen. Portale versuchen manuell einen Überblick über ausgewählte Computer-Sites zu erhalten, indem sie Editoren durchs Internet "surfen" lassen, d.h. den Inhalt beurteilen lassen, und relevante Datenquellen oder Sites zusammenstellen lassen. Die Editoren können pro Tag im Schnitt etwa 10-25 Sites durchsuchen, lesen und evaluieren, wobei von 25 meist nur gerade 1 oder 2 Sites Dokumente mit der gewünschten Qualität oder Information enthalten. Es leuchtet ein, dass Portale für den Anbieter (Provider) bezüglich Zeit-, Kosten- und Arbeitsaufwand sehr ineffizient sind, falls das Ziel eines Portals eine umfassende Indexierung aller verfügbaren Daten zu einem Thema im Internet sein soll. Aus diesem Grund ist es meist so, dass Internet-Portale auch nur Links zu den Start-/Hauptseiten der verschiedenen Sites angeben. Da das Datenangebot auf dem Internet einer starken Dynamik unterliegt, darf sogar gesagt werden, dass mit diesem Verfahren eine vollständige und aktuelle Erfassung aller verfügbaren Daten kaum je möglich sein wird. Unter Vertikale Portale, sog. Vortale, versteht man allgemein Portale, welche ihr Angebot/Auswahl an Informationen auf ein bestimmtes Gebiet beschränken. Vortale besitzen deshalb intrinsisch die gleichen Nachteile wie die oben diskutierten Portale. Im Gegenteil treten die genannten Nachteile bei Vortalen noch mehr in den Vordergrund, da durch ihre Themenbeschränkung der Anspruch an die Qualität und Genauigkeit des Indexierens viel höher angesetzt wird. Dies macht die Aufgabe des Suchens, Lesens und Beurteilens eines kritischen Masses an Informationen noch schwieriger und noch zeitaufwendiger. Ein Beispiel eines solchen Vortals ist u.a. FindLaw.com^{™}, das seit 1995 angeboten und entwickelt wird.

Die Search-Engines des Standes der Technik bestehen meistens aus einem Crawler und einer Eingabemöglichkeit (Front-End Query) für einen Benutzer. Typischerweise umfassen die Search-Engines weiter eine Datenbank mit abgespeicherten Links zu verschiedenen Web-Dokumenten oder Sites. Der Crawler wählt einen Link aus, lädt das Dokument herunter und speichert es in einen Datenspeicher. Danach wählt er den nächsten Link aus und lädt das Dokument ebenfalls in den Datenspeicher etc. etc.. Ein Indexingmodul liest eines der gespeicherten Dokumente vom Datenspeicher und analysiert seinen Inhalt (z.B. auf Wort Basis). Falls das Indexingmodul weitere Links in dem Dokument findet, speichert es sie in der Datenbank des Crawlers, so dass der Crawler die entsprechenden Dokumente später ebenfalls in den Datenspeicher laden kann. Wie der Inhalt des Dokumentes indexiert wird, hängt von der jeweiligen Suchmaschine ab. Die indexierte Information kann z.B. in einer Hash-Tabel oder einem anderen geeigneten Tool zur späteren Verwendung gespeichert werden. Ein Benutzer kann nun ein Suchrequest über das Front-End eingeben und die Search-Engine sucht die entsprechenden indexierten Seiten. Das Verfahren basiert auf den Prinzip "Alles ist relevant", was bedeutet, dass der Crawler jedes Web-Dokument holen und speichern wird, dass irgendwie zugreifbar ist. Komplexe, contentorientierte Abfragen sind mit den heutigen Suchmaschinen nicht durchführbar, ohne dass sie entweder relevante Dokumente ausschliessen oder eine Flut von für die Abfrage irrelevanten Dokumenten mit angeben. Gerade bei Suchabfragen, bei welchen Themen basierend auf themenfremden, nicht scharf fassbaren Parametern indexiert werden sollen, ergeben die Search-Engines kaum je auch nur annähernd befriedigende Antworten. Wie erwähnt kann als ein Beispiel dazu das für die Industrie eminent wichtige Problem angeführt werden, dass zu einem konkreten Thema allgemeine Stimmungstendenzen, Meinungstendenzen oder Stimmungsschwankungen der Benutzer des Netzwerkes erfasst werden sollen. Dies ist basierend auf den heutigen Suchmaschinen nicht durchführbar. Ebenfalls ist es mit den Search-Engines des Standes der Technik bis anhin in keiner Weise möglich, Stimmungen und Stimmungsschwankungen der Netzwerkbenutzer zu einem Thema frühzeitig zu erkennen und die entsprechenden Dokumente anzugeben.

Die US-Patentanmeldung US2003/0195872 offenbart ein System, welches dazu benutzt werden kann, Suchbegriffe mit emotionellen Wertungsbegriffen zu verbinden und eine Suche im Internet und/oder Intranet basierend auf dieser Zuordnung von Suchbegriffen und emotionellen Wertungsbegriffen durchzuführen. Das System erlaubt jedoch kein gezieltes Screening von Datenbanken. Insbesondere sind keine zeitlichen Aussagen mittels des Systems möglich. Dies verhindert bzw. verunmöglicht eine objektive Beurteilung von Tendenzen oder zu erwartenden Ereignissen. Das System erlaubt lediglich ein statisches Listing von in den verfügbaren Datenbanken gespeicherten Dokumenten. Damit müssen alle relevanten Dokumente in diesem System doch mehr oder weniger vollständig nach dem Listing gelesen und interpretiert werden, was eine Automatisierung im Sinne z.B. eines dynamischen Warnsystems verunmöglicht. Als weiteres Beispiel aus dem Stand der Technik zur Relevanzwertung von Dokumenten kann z.B. die US-Patentanmeldung US 2005/0198070A1 gelten. In dieser Anmeldung wird versucht das Problem der Relevanzindexierung mittels Bildung von entsprechenden thematischen Tokens zu lösen. Die Dokumente werden jedoch auch hier nachher dem Benutzer mittels einfachem Listing dargestellt.

Ein weiteres Problem vieler Erfassungssysteme bildet wie bereits teilweise erwähnt das Sprachenproblem. Die internationale Patentanmeldung WO 03/065248 A2 zeigt ein System, welches das Sprachenproblem mittels Mehrsprachenindex versucht zu lösen. Dabei können Dokumente nach Sprachen parallel nach gesucht werden oder entsprechend gewertet. Schlussendlich offenbart die US-Patentanmendlung US2005/0102270A1 ein System, welches zusätzlich zur Indexierung versucht, die Dokumente mittels eines Tabellierung basierend auf hierarchischen Indexparameter (Index, Subindex, etc.) für den Benutzer so zu gliedern, dass er bei einer Vielzahl von gefundenen Dokumenten einen thematisch gegliederten Zugriff zu den Dokumenten bekommt. Das rein tabellarische Aufgliedern der Dokumente kann dem Benutzer jedoch keine Information geben, wie die Themengebiete miteinander verknüpft sind und wie sie sich bezüglich ihrer Relevanz zueinander verhalten. Bei einer grossen Menge von gefundenen Dokumenten ist der Benutzer ebenso verloren, wie bei dem gewöhnlichen herkömmlichen Relevanzlisting.

Im Stand der Technik findet sich weiter die Patentschrift US 5 832 494 A, Egger et al., 03. November 1998. Dieses Dokument offenbart ein Such- und Darstellungstool für eine Datenbank oder mittels Netzwerk verbundenen Datenbanken. Mittels einer sog. Proximity Indexing Verfahren können Referenzen und Bezüge generiert. Dabei kann insbesondere eine graphische Darstellung der Referenzen und Bezüge generiert werden. Ein anderes Dokument des Standes der Technik der Autoren Jau-Yuen Chen et al. "Hierarchical Browsing and Search of Large Image Databases", IEEE Transactions On Image Processing, IEEE Service Center, Piscataway, NJ, US, Bd. 9, Nr. 3, März 2000 offenbart ebenfalls ein Algorithmus, der Distanzen zwischen Daten oder Metadaten paarweise berechnen kann.

Es ist eine Aufgabe dieser Erfindung, ein neues System und ein Verfahren zur benutzergesteuerten multidimensionalen Navigation und/oder themenbasierten Aggregation von Multimediadaten vorzuschlagen, weiches die oben genannten Nachteile des Standes der Technik nicht aufweisen. Insbesondere soll ein automatisiertes, einfaches und rationelles System und Verfahren vorgeschlagen werden, komplexe, contentorientierte Abfragen durchzuführen. Bei der Abfrage sollen insbesondere themenfremden und/oder nicht scharf fassbaren Parametern, wie z.B. Stimmungen oder Stimmungsschwankungen der Netzbenutzer, als Filterparameter möglich sein. Umgekehrt sollen mit dem erfindungsgemässen Verfahren und System ebenfalls möglich sein, Stimmungen und Stimmungsschwankungen der Netzwerkbenutzer zu einem Thema frühzeitig zu erkennen und die entsprechenden Dokumente anzugeben. Weiter soll es dem Benutzer möglich sein, die Vielzahi von Dokumenten nach Themengebieten und Relevanz zueinander schnell und effektiv erfassen und entsprechend auswerten zu können zu können. Das System soll dabei neue Gebiete dynamisch erkennen und verwenden können.

Gemäss der vorliegenden Erfindung wird dieses Ziel insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass zur benutzergesteuerten multidimensionalen Navigation und/oder themenbasierten Aggregation von Multimediadaten eine Vielzahl von Knotenelementen generiert werden und/oder aus zu erfassenden Multimediadaten extrahiert werden, wobei ein Knotenelement einen oder mehrere verknüpfbare, extrahierte und/oder generierte Suchbegriffe und/oder Wertungsbegriffe umfasst, dass ein Relevanzindexparameter zu jedem mittels des Systems zu erfassenden Multimediadatenelement für jede paarweise Knotenelementkombination bestimmt und dem jeweiligen Knotenelementpaar zugeordnet wird, dass in Abhängigkeit der Relevanzindexparameter ein- oder mehrdimensionale Distanzfaktoren bestimmt werden, wobei mit zunehmender Relevanz zweier paarweiser Multimediadatenelemente zueinander der Betrag des entsprechenden Distanzfaktor kleiner wird, dass basierend auf den erfassten Multimediadatenelemente und/oder Knotenelemente in Abhängigkeit der jeweilig ein- oder mehrdimensionalen Distanzfaktoren eine topologische Navigationsmap generiert und graphisch dargestellt wird, und dass der Benutzer mittels Eingabevorrichtung in der topologischen Navigationsmap navigiert und auf gewünschte Multimediadatenelemente und/oder Knotenelemente zugreift. Die Relevanzindexparameter können z.B. entsprechend der Häufigkeit der Suchbegriffe und/oder Wertungsbegriffe in einer paarweisen Knotenelementkombination bzw. der entsprechenden Multimediadaten bestimmt werden. Der Benutzer kann z.B. mittels topographischem Eingabelement zwischen Knotenelemente und/oder Multimediadatenelementen und/oder entstandenen Cluster von Knotenelementen und/oder Multimediadatenelementen mittels Selektion navigieren. Die topographische Eingabevorrichtung kann z.B. mindestens ein graphisches, zweidimensionales Eingabeelement umfassen. Die Erfindung hat u.a. den Vorteil, dass der Benutzer auf eine vollständig neue Art, die erfasste Daten zugänglich und logisch gegliedert erhält. Dies insbesondere ohne dass er selbst die Gliederung vorgeben müsste oder anderweitig in den Prozess eingreifen müsste. Weiter kann er auf eine vollständig neue und intuitive Art zwischen den einzelnen logischen Themengebieten topologisch navigieren und auf die entsprechenden Objekte und/oder Daten zugreifen. Das Navigiersystem mittels der erfindungsgemässen Cluster und Verbindungen erlaubt erst den effizienten Zugriff auf solch grosse Datenmengen, ohne dass sich der Benutzer in der Datenmenge verliert.

In einer Ausführungsvariante wird auf benutzerspezifische Selektion eines initiierenden Knotenelementes und/oder Multimediadatenelementes die topologische Navigationsmap bezüglich dieses initiierenden Knotenelementes und/oder Multimediadatenelements perspektivisch korrigiert und für den Benutzer zugreifbar dargestellt. Zur Navigation können durch den Benutzer in der topologischen Navigationsmap gewünschte Knotenelemente und/oder Multimediadatenelemente mittels der Eingabevorrichtung selektiert und die topologische Navigationsmap basierend auf der Selektion mittels des System perspektivisch korrigiert und neu dargestellt werden. Diese Ausführungsvariante hat den Vorteil, dass der Benutzer sich vollständig intuitiv, wie in einer Landschaft zwischen den Datenclusters über die Eingabevorrichtung bewegen kann und entsprechende Daten beziehen kann. Das Knotenelement, basierend auf welchem das System die erste Darstellung der Navigationsmap generiert, kann z.B. mittels Selektion eines oder mehreren Suchbegriffen durch den Benutzer und/oder anderweitig benutzerspezifisch erfolgen. Dies hat u.a. den Vorteil, dass der Benutzer schnell und am gewünschten Ort in der topologischen Navigationsmap starten kann bzw. die Navigationsmap bereit gestellt erhält.

In einer anderen Ausführungsvariante werden die Distanzfaktoren mittels eines Federmodel-Moduls und/oder mittels eines Maximum-Entropiemoduls bestimmt werden. Dies hat u.a. den Vorteil, dass die Daten auf eine vollständig neue Art für den Benutzer, insbesondere graphisch, zugänglich gemacht werden. Bei der Navigation mittels Eingabevorrichtung durch den Benutzer innerhalb der Navigationsmap, entsprechen die Distanzen beim Navigieren in den Daten ebenfalls der Relevanz der Daten bzw. Datenclusters zueinander. Die Relevanzindexparameter und/oder Distanzfaktoren können mittels des Systems z.B. dynamisch basierend auf der Selektion eines Knotenelementes und/oder Multimediadatenelementes generiert und/oder bestimmt werden.

In einer weiteren Ausführungsvariante werden zur Aggregation und Überwachung und/oder Analyse der dezentralisiert gespeicherten Multimediadaten in einem Datenspeicher ein oder mehrere verknüpfbare Suchbegriffe abgespeichert, wobei eine Recheneinheit über ein Netzwerk auf mit Quelldatenbanken verbundene Netzwerknodes zugreift und Daten der Quelldatenbanken basierend auf den Suchbegriffen selektiert werden, wobei in einem Datenspeicher mindestens ein Wertungsparameter einem Suchbegriff und/oder einer Verknüpfung von Suchbegriffen zugeordnet abgespeichert wird, wobei im Datenspeicher mindestens eine der Quelldatenbanken einem Suchbegriff und/oder einer Verknüpfung von Suchbegriffen zugeordnet abgespeichert wird, wobei mittels eines Filtermoduls der Recheneinheit auf die Quelldatenbanken der Netzwerknodes zugegriffen wird, wobei für jeden Wertungsparameter in Verbindung mit den zugeordneten Suchbegriffen und den zugeordneten Quelldatenbanken und/oder einer zeitlichen Wertung der Dokumente eine Wertungsliste mit gefundenen Datensätzen erzeugt, wobei mittels eines Parametrisierungsmoduls basierend auf der Wertungsliste für den jeweiligen Wertungsparameter eine oder mehrere variable Stimmungsgrösse mindestens teilweise dynamisch generiert wird, welche variable Stimmungsgrösse zeitliche, positive und/oder negative Stimmungschwankungen von Benutzern des Netzwerkes entsprechen, wobei die extrahierten Suchbegriffe und/oder Wertungsbegriffe und/oder Knotenelemente mindestens die Stimmungsgrössen umfassen. Natürlich können z.B. Stimmungsgrössen auch die Federkonstanten im Federmodell-Modul und die Relevanzindexparameter die Kraft oder umgekehrt bestimmen. Die Recheneinheit kann z.B. zur Generierung der variablen Stimmungsgrössen und/oder der Daten des Contentmoduls ein HTML- (Hyper Text Markup Language) und/oder HDML- (Handheld Device Markup Language) und/oder WML- (Wireless Markup Language) und/oder VRML- (Virtual Reality Modeling Language) und/oder ASP (Active Server Pages) -Modul umfassen. Diese Ausführungsvariante hat u.a. den Vorteil, dass das System auf einer vorgängig spezifisch definierbaren Gesamtheit an Quellen aus einem Netzwerk, insbesondere aus dem Internet (z.B. Web-Sites, Chat Rooms, E-mail Foren etc.) basiert, welche ebenfalls nach vorgängig definierbaren Suchkriterien gescannt werden. Das System ermöglicht also nicht nur die Generierung einer "Trefferliste" von im Internet gefundenen Web-Sites mit entsprechendem Inhalt, sondern das System ermöglicht das erwähnte Screening von vordefinierbaren Quellen und deren systematische und dadurch quantitativ relevante Auswertung entsprechend den gewünschten und definierten inhaltlichen Kriterien (z.B. welche Medikamente werden im Zusammenhang mit schweren Nebenwirkungen genannt - und die in welcher Häufigkeit). Dieses inhaltliche Screening kann in einer periodischen Abfolge (zeitlich) erfolgen, wobei sämtliche gefunden Treffer'-Inhalte jederzeit wieder verfügbar gemacht werden können und somit statistische Aussagen, gerade eben über die Zeit, möglich sind. Natürlich können die Dokumente auch anderweitig auf ihre zeitliche Zuordnung, z.B. basierend auf dem Abspeicherungsdatum erfasst werden. Das System erkennt also auch wann welcher Inhalt in den besagten Quellen abgelegt wurde. Dadurch dass auf diese Art eine quantitative Auswertung möglich wird, kann das System die definierten Quellen selbständig 'monitoren' und ein Überschreiten eines 'Treshold-Wertes' (quantitativ) entsprechend darstellen. Das System ermöglicht es, Suchkriterien so zu definieren, dass nach einem inhaltlich logischen Zusammenhang (einen Sinn ergebend) gesucht werden kann (nicht nur das Stichwort zählt, sondern inhaltlicher Zusammenhang). Das System verbindet damit die Suchkriterien zu einem Inhalt, nach welchen dann gesucht wird.

In einer Ausführungsvariante werden ein oder mehrere der Wertungsparameter mittels einer lexikographischen Wertungsdatenbank generiert. Dasselbe kann für die Suchbegriffe realisiert sein. Diese Ausführungsvariante hat u.a. den Vorteil, dass Such- und Wertungsbegriffe benutzerspezifisch und/oder applikationsspezifisch definiert werden können. Als Ausführungsvariante kann die lexikographischen Wertungsdatenbank und/oder Suchbegriffdatenbank dynamisch basierend auf bereits durchgeführten Suchen/Analysen ergänzt und/oder verändert werden. Damit kann das System an veränderte Bedingungen und/oder Wortbildungen automatisiert angepasst werden, was so im Stand der Technik nicht möglich war.

In einer anderen Ausführungsvariante werden ein oder mehrere der Wertungsparameter dynamisch mittels der Recheneinheit während der Erzeugung der Wertungsliste generiert. Diese Ausführungsvariante hat u.a. die gleichen Vorteile wie die vorhergehende Ausführungsvariante.

In einer weiteren Ausführungsvariante wird die Wertungsliste mit den gefundenen Datensätzen und/oder Verweisen auf die gefundenen Datensätze in einem Contentmodul der Recheneinheit für einen Benutzer zugreifbar abgespeichert. Diese Ausführungsvariante hat u.a. den Vorteil, dass das System z.B. als ein Warnsystem für den Benutzer eingesetzt werden kann, das ihn über bevorstehenden Tendenzen im Markt oder der Bevölkerung ( z.B. Class Actions etc.) informiert und/oder warnt.

In einer Ausführungsvariante werden periodisch die Stimmungsgrössen mittels der Recheneinheit überprüft und falls mindestens eine der Stimmungsgrössen ausserhalb einer festlegbaren Schwankungstoleranz oder bestimmbaren Erwartungswertes liegt, die entsprechende Wertungsliste mit den gefundenen Datensätze und/oder Verweisen auf gefundene Datensätze im Contentmodul der Recheneinheit für einen Benutzer zugreifbar abgespeichert und/oder aktualisiert. Diese Ausführungsvariante hat u.a. den Vorteil, dass die Datenbanken auf zeitliche Veränderungen oder zu erwartende Ereignisse, z.B. mittels definierbarem Wahrscheinlichkeitsschwellwert, gezielt gescannt werden können und den Benutzer so z.B. rechtzeitig warnen können (z.B. Produktefehler, Produktehaftung etc.)

In einer wieder anderen Ausführungsvariante wird ein Benutzerprofil anhand von Benutzerinformationen erstellt, wobei basierend auf den im Contentmodul abgespeicherten gefundenen Datensätzen und/oder Verweisen auf gefundene Datensätze mittels eines Repackagingmoduls unter Berücksichtigung der Daten des Benutzerprofils benutzerspezifisch optimierte Daten erzeugt werden, welche benutzerspezifisch optimierten Daten dem Benutzer im Contentmodul der Recheneinheit abgespeichert zur Verfügung gestellt werden. Dem Benutzer können als Ausführungsvariante verschiedene Benutzerprofile für unterschiedliche Kommunikationsvorrichtungen des Benutzers zugeordnet abgespeichert werden. Weiter können z.B. auch Daten zum Benutzerverhalten von der Recheneinheit automatisch erfasst und dem Benutzerprofil zugeordnet abgespeichert werden. Diese Ausführungsvariante hat u.a. den Vorteil, dass unterschiedliche Accessmöglichkeiten des Benutzers benutzerspezifisch berücksichtigt werden können und das System so benutzerspezifisch optimiert werden kann.

In einer Ausführungsvariante werden mittels eines Historymoduls zu jeder berechneten variablen Stimmungsgrösse die Werte bis zu einem festlegbaren vergangenen Zeitpunkt abgespeichert. Diese Ausführungsvariante hat u.a. die gleichen Vorteile einer zeitlichen Kontrolle und Erfassung von Veränderungen innerhalb der abgespeicherten und zugreifbaren Dokumente.

In einer weiteren Ausführungsvariante berechnet die Recheneinheit mittels eines Extrapolationsmoduls Erwartungswerte zu einer bestimmbaren Stimmungsgrösse basierend auf den Daten des Historymoduls für einen bestimmbaren zukünftigen Zeitpunkt und speichert sie in einem Datenspeicher der Recheneinheit ab. Diese Ausführungsvariante hat u.a. den Vorteil, dass zu erwartende Ereignisse automatisiert vorausgesagt werden können. Dies kann nicht nur bei Warnsystemen (z.B. gegen Class Actions bei Produktehaftung etc.) sinnvoll sein, sondern ganz allgemein bei Systemen, bei welchen eine statistisch-zeitliche Extrapolation wichtig ist, wie bei Risikomanagementsystem an der Börse oder Finanzmärkten etc.

An dieser Stelle soll festgehalten werden, dass sich die vorliegende Erfindung neben dem erfindungsgemässen Verfahren auch auf ein System zur Ausführung dieses Verfahrens bezieht. Ferner beschränkt es sich nicht auf das genannte System und Verfahren, sondern bezieht sich ebenso auf ein Computerprogrammprodukt zur Realisierung des erfindungsgemässen Verfahrens.

Nachfolgend werden Ausführungsvarianten der vorliegenden Erfindung anhand von Beispielen beschrieben. Die Beispiele der Ausführungen werden durch folgende beigelegte Figuren illustriert:

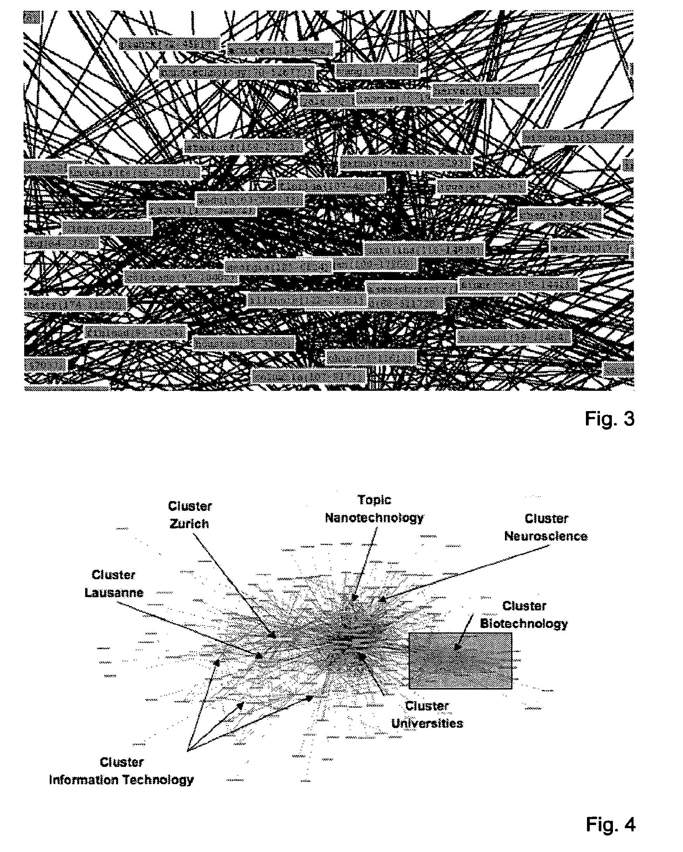

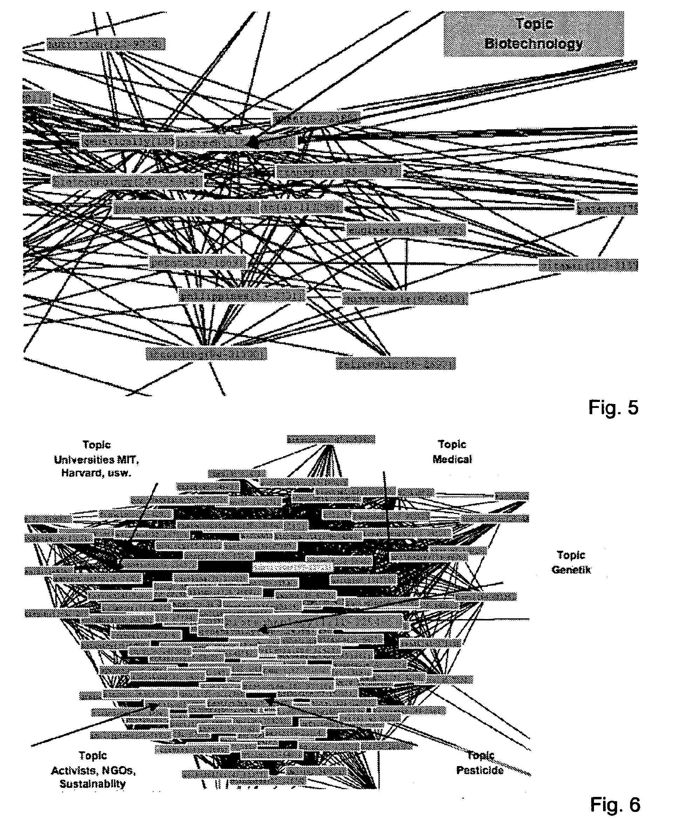

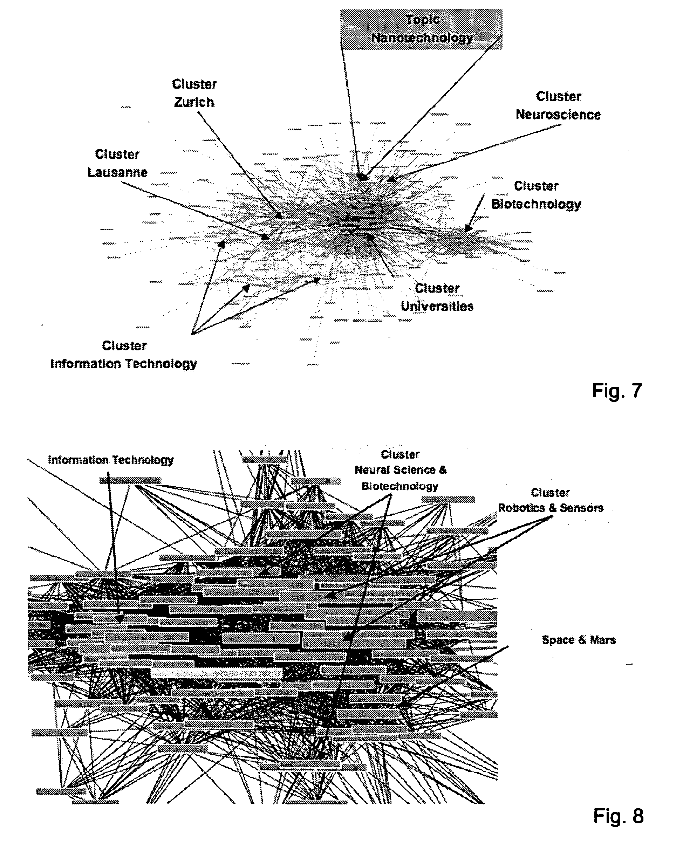

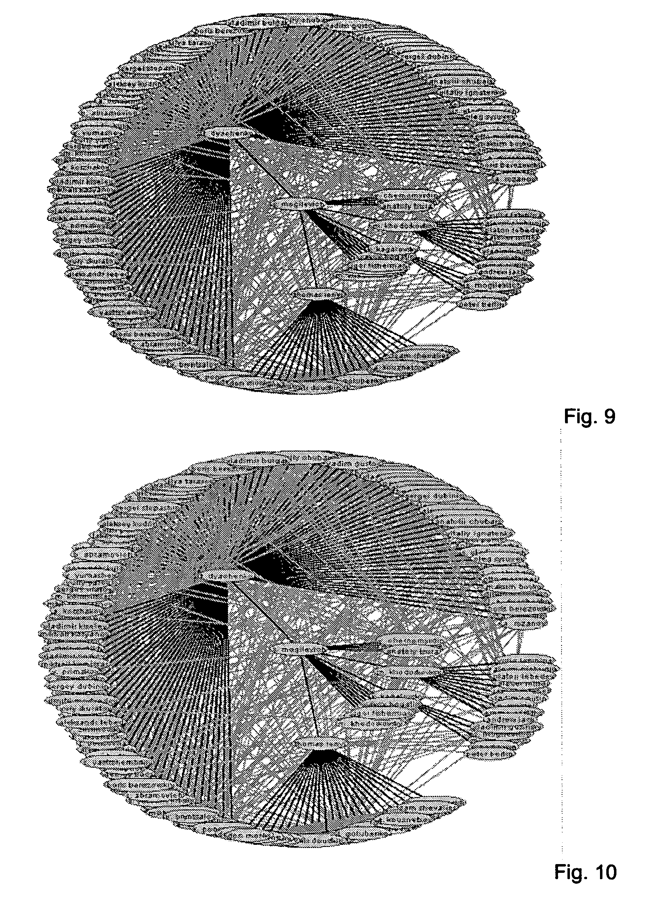

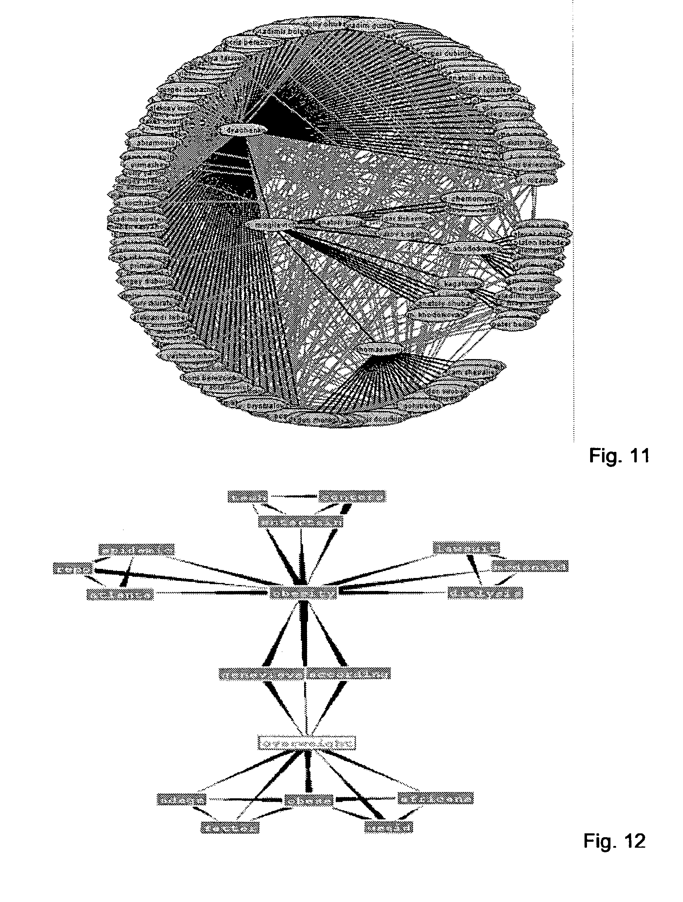

Figuren 1 bis 12 zeigen schematisch die Funktionsweise eines erfindungsgemässen Beispieles von Navigationsmaps. Die unterschiedlichen Distanzen innerhalb der topologischen Navigationsmap basieren auf der paarweisen Relevanz der Themengebiete und bieten dem Benutzer die Grundlage zum Navigieren und/oder Erfassen der Dokumente. Das System verändert die Navigationsmap dynamisch beruhend auf der Selektion durch den Benutzer mittels Eingabevorrichtung.

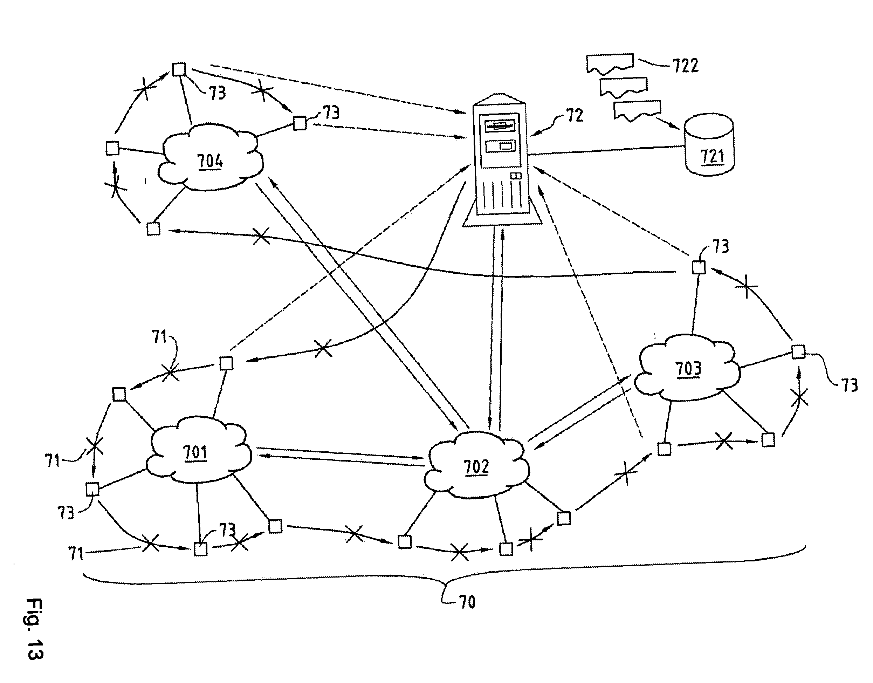

Figur 13 zeigt schematisch die Funktionsweise von Robots/Crawlers, Search-Robots oder Crawlers. Der Crawler bewegt sich durch das Netzwerk 70, hier das Internet 701-704, von Netzwerk-Node 73 zu Netzwerk-Node 73 bzw. von Web-Site 73 zu Web-Site 73 (Pfeil 71) und schickt dabei den Inhalt jedes Web-Dokumentes, welches er findet, an seinen Host-Rechner 72 zurück. Der Host-Rechner 72 indexiert die durch den Crawler geschickten Web-Dokumente 722 und speichert die Information in einer Datenbank 721 ab. Jede Suchanfrage (Request) durch einen Benutzer greift auf die Informationen der Datenbank 721 zu.

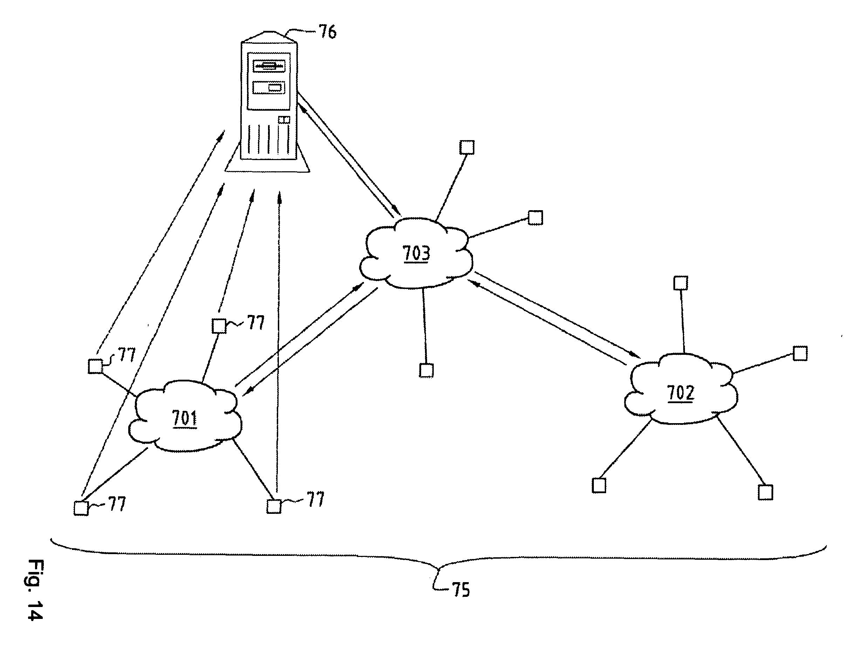

Figur 14 illustriert schematisch die Funktionsweise von Metacrawlers. Metacrawlers bieten die Möglichkeit, mittels einer einzigen Sucheinrichtung 82 zu suchen, wobei die Antwort zusätzlich durch eine Vielzahl von weiteren Systemen 77 des Netzes 75 erzeugt wird. Der Metacrawler dient somit als ein Front-End zu einer Vielzahl von weiteren Systemen 77. Die Antwort auf einen Suchrequest von einem Metacrawler wird typischerweise durch die Anzahl seiner weiteren Systeme 77 begrenzt.

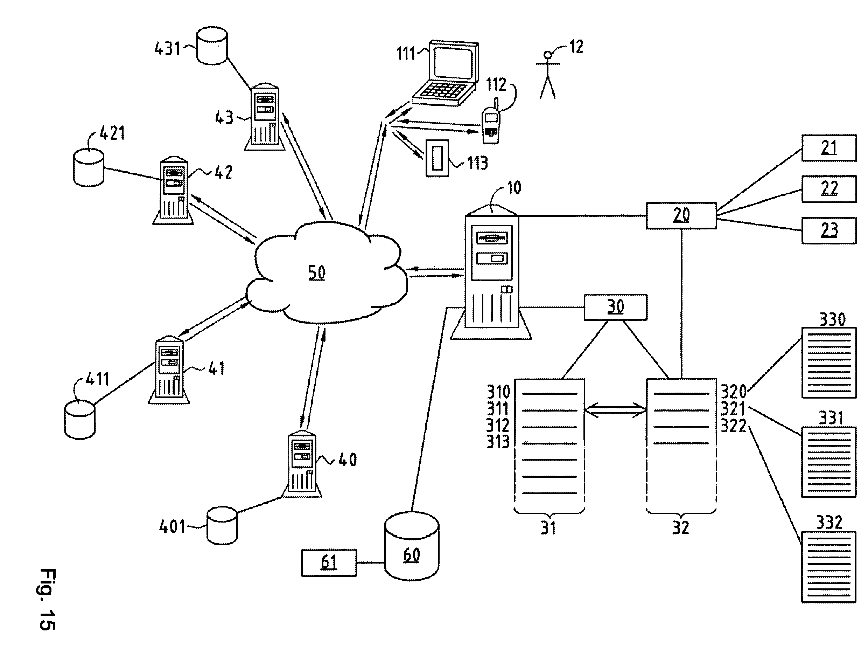

Figur 15 zeigt ein Blockdiagramm, welches schematisch ein System bzw. ein Verfahren zur Aggregation und Analyse von dezentralisiert gespeicherten Multimediadaten wiedergibt. In einem Datenspeicher 31 werden ein oder mehrere verknüpfbare Suchbegriffe 310, 311, 312, 313 abgespeichert. Eine Recheneinheit 10 greift über ein Netzwerk 50 auf mit Quelldatenbanken 401, 411 ,421,431 verbundene Netzwerknodes 40, 41, 42, 43 zu und Daten der Quelldatenbanken 401, 411, 421, 431 basierend auf den Suchbegriffen 310, 311, 312, 313 werden selektiert.
Figuren 1 bis 12 illustrieren schematisch unterschiedliche - Navigationsmaps, die zur Realisierung der Erfindung verwendet werden können. In diesem Ausführungsbeispiel werden zur benutzergesteuerten multidimensionalen Navigation und/oder themenbasierten Aggregation von Multimediadaten eine Vielzahl von Knotenelementen 1 generiert und/oder aus zu erfassenden Multimediadaten extrahiert. Ein Knotenelement 1 umfasst einen oder mehrere verknüpfbare, extrahierte und/oder generierte Suchbegriffe und/oder Wertungsbegriffe. Zu jedem mittels des Systems zu erfassenden Multimediadatenelement wird ein Relevanzindexparameter für jede paarweise Knotenelementkombination bestimmt und dem jeweiligen Knotenelementpaar zugeordnet wird. Die Relevanz bzw. die Relevanzfaktoren können z.B. Häufigkeit der Suchbegriffe und/oder Wertungsbegriffe, ihrer unmittelbaren oder mittelbaren Nähe zueinander etc. etc. in oder mehreren Dokumenten umfassen. Aber auch andere im Stand der Technik bekannte Verfahren zur Bestimmung der Relevanz eines Dokumentes in Bezug zu anderen Dokumenten ist vorstellbar. Solche Verfahren sind in vielen Variationen bekannt z.B. von den gängigen Search-Engines wie Altavista, Google etc. In Abhängigkeit der Relevanzindexparameter werden ein- oder mehrdimensionale Distanzfaktoren bestimmt, wobei mit zunehmender Relevanz zweier paarweiser Multimediadatenelemente zueinander der Betrag des entsprechenden Distanzfaktor kleiner wird. Basierend auf den erfassten Multimediadatenelemente und/oder Knotenelemente in Abhängigkeit der jeweilig ein- oder mehrdimensionalen Distanzfaktoren wird eine topologische Navigationsmap generiert und graphisch dargestellt. Die topologische Navigationsmap kann 1-, 2-, oder 3-dimensional für den Benutzer dargestellt werden. Höhere Dimensionen sind natürlich ebenfalls möglich, bedingen allerdings eine entsprechende Darstellung, wie sie im Stand der Technik mehrfach gefunden werden kann zur Darstellung mehrdimensionaler Gebilde. Der Benutzer navigiert mittels Eingabevorrichtung in der topologischen Navigationsmap 4 und greift auf gewünschte Multimediadatenelemente und/oder Knotenelemente 1 zu. Der Benutzer kann z.B. mittels topographischem Eingabelement zwischen Knotenelemente 1 und/oder Multimediadatenelementen und/oder entstandenen Cluster 2 von Knotenelementen 1 und/oder Multimediadatenelementen mittels Selektion navigieren. Auf benutzerspezifische Selektion eines initiierenden Knotenelementes 5 und/oder Multimediadatenelementes können die topologische Navigationsmap 4 bezüglich dieses initiierenden Knotenelementes 5 und/oder Multimediadatenelements perspektivisch korrigiert und für den Benutzer zugreifbar dargestellt werden. Unter "initiierend" soll in dieser Anmeldung "anfänglich", im Sinne von "erstmalig dargestellt" verstanden werden. So muss vom System in irgendeiner Weise nach einer speziellen Erfassung der Multimediadaten oder beim definieren neuer Wertungs- und/oder Suchbegriffe einen entsprechenden Ausgangspunkt zur Darstellung der Navigationsmap wählen. Dieser Ausgangspunkt ist das eines initiierenden Knotenelementes 5 und/oder Multimediadatenelementes. Zur Navigation durch den Benutzer in der topologischen Navigationsmap kann der Benutzer gewünschte Knotenelemente 1 und/oder Multimediadatenelemente mittels der Eingabevorrichtung selektieren, wobei die topologische Navigationsmap 4 basierend auf der Selektion mittels des System perspektivisch korrigiert und neu dargestellt wird. Dies erlaubt ein dynamisches Navigieren innerhalb der topologischen Navigationsmap. Der Benutzer kann so die Darstellung und das Erfassen bzw. Zugreifen auf Daten mittels der topologischen Eingabevorrichtung visuell steuern und kontrollieren. Die topographische Eingabevorrichtung kann mindestens ein graphisches, zweidimensionales Eingabeelement umfasst. Dies kann z.B. auch ein Koordinateneingabegerät, wie z.B. eine Maus, Trackball, Eye-Tracker etc. etc. umfassen. Andere topologische Eingabevorrichtungen sind aber natürlich auch vorstellbar, ohne dass dadurch der Schutzbereich der Erfindung tangiert würde.

Die Distanzfaktoren können z.B. mittels eines Federmodel-Moduls bestimmt werden. Diese Gestalt der "elastischen" Navigationsmap wird durch eine Federmodellbestimmung der Distanzfaktoren bestimmt werden. Zwei benachbarten Kontenelemente werden als Punkte durch Federn verknüpft, welche bei einer Relativverschiebung Relevanzindexparameter gespannt werden. In einer dargestellten Navigationsmap kann jedem Knotenelementpaar k₁, k₂, k₃ etc. Federkonstanten zugeordnet werden entsprechend den Relevanzindexparameter und/oder auf den Relevanzindexparameter basierende Kraftparameter. Innerhalb der Navigationsmap verhalten sich die Knotenelemente zueinander nach den bekannten Gesetzmässigkeiten des Hook'schen Gesetzes. Die Dehnung bzw. die Distanzfaktoren können dabei proportional zur Relevanz, d.h. der Kraft bzw. der gewählten Federkonstanten sein. Zur Navigation können die Knotenelemente sinnvollerweise für den Benutzer in der Navigationsmap perspektivisch korrigiert werden. Die Distanzfaktoren können z.B. aber auch mittels eines Maximum-Entropiemoduls wie bei neuronalen Netzwerken bestimmt werden. Die Distanzfaktoren basieren in diesem Fall z.B. auf der dicke der resultierenden synaptischen Verbindungen zwischen den Neuronen (hier entsprechend: Knotenelementen). Aber auch andere Module, wie z.B. Module basierend auf dem Markov-Model können sinnvoll sein. Die Relevanzindexparameter und/oder Distanzfaktoren können z.B. dynamisch mittels des Systems basierend auf der Selektion eines Knotenelementes 1 und/oder Multimediadatenelementes generiert und/oder bestimmt werden. Damit kann der Benutzer zur Navigation mittels der Eingabevorrichtung eine dynamische Darstellung der Navigationsmap erhalten, was seine Orientierung erleichtern kann. Zur ersten Darstellung kann das Knotenelement 1, basierend auf welchem die erste Darstellung der Navigationsmap 4 generiert wird, mittels Selektion eines oder mehreren Suchbegriffen durch den Benutzer und/oder anderweitig benutzerspezifisch erfolgt.

Zur Aggregation und Analyse der dezentralisiert gespeicherten Multimediadaten im Datenspeicher 31 können ein oder mehrere verknüpfbare Suchbegriffe 310,311,312,313 abgespeichert werden. Unter Multimediadaten sind u.a. digitale Daten wie Texte, Graphiken, Bilder, Karten, Animationen, bewegte Bilder, Video, Quicktime, Tonaufnahmen, Programme (Software), programmbegleitende Daten und Hyperlinks oder Verweise auf Multimediadaten zu verstehen. Dazu gehören z.B. auch MPx (MP3) oder MPEGx (MPEG4 oder 7) Standards, wie sie durch die Moving Picture Experts Group definiert werden. Insbesondere können die Multimediadaten Daten im HTML- (Hyper Text Markup Language), HDML- (Handheld Device Markup Language), WMD-(Wireless Markup Language), VRML- (Virtual Reality Modeling Language) oder XML- (Extensible Markup Language) Format umfassen. Eine Recheneinheit 10 greift über ein Netzwerk 50 auf mit Quelldatenbanken 401,411,421,431 verbundene Netzwerknodes 40,41,42,43 zu und Daten der Quelldatenbanken 401,411,421,431 werden basierend auf den Suchbegriffen 310,311,312,313 selektiert. Gemäss der vorliegenden Erfindung ist die Recheneinheit 10 mit den Netzwerknodes 40,41,42,43 über ein Kommunikationsnetz bidirektional verbunden. Das Kommunikationsnetz 50 umfasst beispielsweise ein GSM- oder ein UMTS-Netz, oder ein satellitenbasiertes Mobilfunknetz, und/oder ein oder mehrere Festnetze, beispielsweise das öffentlich geschaltete Telefonnetz, das weltweite Internet oder ein geeignetes LAN (Local Area Network) oder WAN (Wide Area Network). Insbesondere umfasst es auch ISDN- und XDSL-Verbindungen. Die Multimediadaten können, wie dargestellt, an unterschiedlichen Orten in unterschiedlichen Netzen oder lokal für die Recheneinheit 10 zugreifbar abgespeichert sein. Die Netzwerknodes 40,41,42,43 können WWW-Server (HTTP: Hyper Text Transfer Protocol / WAP: Wireless Application Protocol etc.), Chat-Server, E-Mail-Server (MIME), News-Server, E-Journal-Server, Group-Server oder beliebige andere File-Server, wie z.B. FTP-Server (FTP: File Transfer Protocol), ASD (Active Server Pages) basierende Server oder SQL basierende Server (SQL: Structured Query Language) etc. umfassen.

In einem Datenspeicher 32 der Recheneinheit 10 wird mindestens ein Wertungsparameter 320,321,322 einem Suchbegriff 310,311,312,313 und/oder einer Verknüpfung von Suchbegriffen 310,311,312,313 zugeordnet und abgespeichert. Der Suchbegriff 310,311,312,313 und/oder eine Verknüpfung von Suchbegriffen 310,311,312,313 umfasst den eigentlichen Suchbegriff. Um auf das erwähnte Beispiel des Fiat Uno zurückzukommen, würde der Suchbegriff 310,311,312,313 und/oder eine Verknüpfung von Suchbegriffen 310,311,312,313 folglich z.B. Fiat, Fiat Uno, Fiat AND/OR Uno FIAT etc. Die Wertungsparameter 320,321,322 umfassen hingegen das Wertungsthema z.B. Class Action, Gerichtsfall etc. mit entsprechenden Wertungsattributen. Die Wertungsattribute können für ein Wertungsthema spezifisch sein, z.B. Schaden, Haftung, Versicherungssumme oder ganz allgemeine Wertungsurteile wie "gut", "schlecht", "wütend" etc, d.h. z.B. psychologische oder emotionelle Attribute oder Worte, welche eine solche Assoziierung zulassen, umfassen. Es ist wichtig darauf hinzuweisen, dass die Wertungsparameter 320,321,322 auch Einschränkungen bezüglich dem Netzwerk 50 und/oder spezifischen Netzwerknodes 40-43 umfassen können. Als Beispiel ist es dadurch möglich, die Aggregation und Analyse der Multimediadaten beispielsweise auf bestimmte News-Groups und/oder Web-Sites mittels entsprechender Wertungsparameter 320,321,322 einzuschränken. In diesem Ausführungsbeispiel können ein oder mehrere der Wertungsparameter 320,321,322 mittels einer lexikographischen oder einer anderen Wertungsdatenbank generiert werden. Ebenso kann es sinnvoll sein, dass die oder mehrere Wertungsparameter 320,321,322 mindestens teilweise dynamisch mittels der Recheneinheit 10 während der Erzeugung der Wertungsliste 330,331,332 generiert werden. Dynamisch kann z.B. bedeuten, dass das Parametrisierungsmodul 20 oder das Filtermodul 30 beim Indexieren und/oder zu einem späteren Zeitpunkt des Verfahrens die Multimediadaten und/oder die Daten der Wertungsliste 330,331,332 nach einem Wertungsparameter 320,321,322 assoziierbar überprüft und diese den Wertungsparametern 320,321,322 hinzufügt. Es kann in diesem Fall sinnvoll sein, dass die Wertungsparameter 320,321,322 durch den Benutzer 12 editierbar sind. Bei der dynamischen Erzeugung können insbesondere z.B. Analysemodule, basierend auf neuronalen Netzwerk-Algorithmen, sinnvoll sein.

Im Datenspeicher 32 kann mindestens eine der Quelldatenbanken 401,411,421,431 einem Suchbegriff 310,311,312,313 und/oder einer Verknüpfung von Suchbegriffen 310,311,312,313 zugeordnet abgespeichert werden. Die Zuordnung kann nicht nur explizite Netzwerkadressen und/oder Verweise von Datenbanken umfassen, sondern auch Kategorien und/oder Gruppen von Datenbanken, wie z.B. Web-Sites, Chat Rooms, E-mail Foren etc. etc.). Die Zuordnung kann automatisiert, teilweise automatisiert, manuell und/oder basierend auf einem Benutzerprofil und/oder anderen benutzerspezifischen und/oder applikationsspezifischen Daten realisiert sein. Die Recheneinheit 10 greift mittels eines Filtermoduls 30 auf die Quelldatenbanken 401,411,421,431 der Netzwerknodes 40,41,42,43 zu und erzeugt für jeden Wertungsparameter 320,321,322 in Verbindung mit den zugeordneten Suchbegriffen 310,311,312,313 und/oder Quelldatenbanken 401,411,421,431 eine Wertungsliste 330,331,332 mit gefundenen Datensätzen. Es ist für den Fachmann unmittelbar, dass das Wertungsthema nicht unbedingt gleichrangig wie die Wertungsattribute beim Indexieren behandelt werden muss. Zur Erzeugung der Wertungsliste 330,331,332 basierend auf den Multimediadaten, können z.B. Metadaten, basierend auf dem Inhalt der Multimediadaten, durch ein Metadatenextraktionsmodul der Recheneinheit 10 generiert bzw. aggregiert werden. D.h., die Wertungsliste 330,331,332 kann damit solche Metadaten umfassen. Die Metadaten oder ganz allgemein die Daten der Wertungsliste 330,331,332 können z.B. anhand einer inhaltsbasierenden Indexingtechnik extrahiert werden und können Stichworte, Synonyme, Verweise auf Multimediadaten (z.B. auch Hyperlinks), Bild- und/oder Tonsequenzen etc. umfassen. Solche Systeme sind im Stand der Technik in unterschiedlichsten Variationen bekannt. Beispiele dafür sind die US-Patentschrift US 5 414 644, welche eine Drei-File-Indexingtechnik beschreibt oder die US-Patentschrift US 5 210 868, welche bei dem Indexieren der Multimediadaten und Extrahieren der Metadaten zusätzlich auch Synonyme als Such-Keywords abspeichert. Im vorliegenden Ausführungsbeispiel können die Metadaten aber auch mindestens teilweise dynamisch (in Real-Time), basierend auf Benutzerdaten eines Benutzerprofils, erzeugt werden. Dies hat z.B. den Vorteil, dass die Metadaten immer die für den Benutzer 12 sinnvolle Aktualität und Genauigkeit besitzen. Vom Benutzerverhalten an der Kommunikationsvorrichtung 111, 112, 113 zum Metadatenextraktionsmodul existiert also eine Art Feedbackmöglichkeit, die die Extraktion direkt beeinflussen kann. Es können aber auch, insbesondere bei der Suche bestimmter Daten, sog. Agents eingesetzt werden.

Das genannte Benutzerprofil kann z.B. anhand von Benutzerinformationen erstellt und in der Recheneinheit 10 dem Benutzer 12 zugeordnet abgespeichert sein. Das Benutzerprofil bleibt entweder permanent einem bestimmten Benutzer 12 zugeordnet abgespeichert oder wird temporär erstellt. Die Kommunikationsvorrichtung 11/112/113 des Benutzers kann beispielsweise ein PC (Personal Computer), TV, PDA (Personal Digital Assistant) oder ein Mobilfunkgerät sein (insbesondere z.B. in Kombination mit einem Broadcastempfänger). Das Benutzerprofil kann Informationen über einen Benutzer, wie z.B. Ort der Kommunikationseinheit 111/112/113 des Benutzers im Netzwerk, Identität des Benutzers, benutzerspezifische Netzwerkeigenschaften, benutzerspezifische Hardwareeigenschaften, Daten zum Benutzerverhalten etc. umfassen. Der Benutzer 12 kann vorgängig zu einer Suchanfrage mindestens Teile von Benutzerdaten des Benutzerprofils festlegen und/oder modifizieren. Natürlich bleibt dem Benutzer 12 stets die Möglichkeit, Multimediadaten durch direkten Zugriff, also ohne Such- und Zusammenstellhilfe der Recheneinheit 10 im Netz zu suchen und auf sie zuzugreifen. Die übrigen Daten des Benutzerprofils können automatisch durch die Recheneinheit 10, durch autorisierte Dritte oder ebenfalls vom Benutzer bestimmt sein. So kann die Recheneinheit 10 z.B. automatische Anschlusserkennung, Benutzeridentifizierung und/oder automatisches Aufzeichnen und Auswerten des Benutzerverhaltens (Zeit des Zugriffs, Häufigkeit des Zugriffs etc.) umfassen. Diese Daten zum Benutzerverhalten - können in einer Ausführungsvariante dann wiederum vom Benutzer entsprechend seinen Wünschen modifizierbar sein.

Mittels eines Parametrisierungsmoduls 20 wird, basierend auf der Wertungsliste 330,331,332, für den jeweiligen Wertungsparameter 320,321,322 eine oder mehrere variable Stimmungsgrösse 21 mindestens teilweise dynamisch generiert. Die extrahierten und/oder generierten Suchbegriffe und/oder Wertungsbegriffe und/oder Knotenelemente können dabei mindestens die Stimmungsgrössen 21 umfassen. Natürlich können die Stimmungsgrössen z.B. auch die Federkonstanten im Federmodell-Modul und die Relevanz die Kraft oder umgekehrt bestimmen. Zur Generierung der variablen Stimmungsgrössen 21 und/oder der Daten des Contentmoduls 60 kann z.B. HTML und/oder HDML und/oder WML und/oder VRML und/oder ASD verwendet werden. Die variable Stimmungsgrösse 21 entspricht positiven und/oder negativen Stimmungschwankungen von Benutzern des Netzwerkes 50. Die variable Stimmungsgrösse 21 kann ebenfalls für ein Wertungsthema spezifisch sein. Z.B. kann die variable Stimmungsgrösse 21 die Wahrscheinlichkeit für eine Class Action gegen eine bestimmte Firma und/oder ein bestimmtes Produkt wiedergeben oder nur z.B. bei einem Medikament eine allgemeine Nützlichkeitseinstufung von den Benutzern oder einer spezifischen Untergruppe wie Ärzte und/oder anderes medizinisches Fachpersonal. Als Ausführungsbeispiel kann die Wertungsliste 330,331,332 mit den gefundenen Datensätzen und/oder Verweisen auf gefundene Datensätze in einem Contentmodul 60 der Recheneinheit 10 für einen Benutzer zugreifbar abgespeichert werden. Um auf das Contentmodul 60 zugreifen zu können, kann es sinnvoll sein (z.B. zum Verrechen der beanspruchten Dienstleistung) einen bestimmten Benutzer 12 von der Recheneinheit 10 mittels einer Benutzerdatenbank zu identifizieren. Zur Identifikation können z.B. Personal - Identification Numbers (PIN) und/oder so genannte Smartcards verwendet werden. Smartcards setzen im Normalfall ein Kartenlesegerät bei der Kommunikationsvorrichtung 111/112/113 voraus. In beiden Fällen wird der Name oder eine andere Identifikation des Benutzers 12 sowie die PIN zur Recheneinheit 10 oder einem trusted Remote-Server übermittelt. Ein Identifikationsmodul bzw. Authentifikationsmodul entschlüsselt (falls notwendig) und überprüft die PIN über die Benutzerdatenbank. Kreditkarten können als Ausführungsvariante ebenfalls zur Identifikation des Benutzers 12 verwendet werden. Verwendet der Benutzer 12 seine Kreditkarte, kann er ebenfalls seinen PIN eingeben. Typischerweise enthält der Magnetstreifen der Kreditkarte die Kontonummer und die verschlüsselte PIN des autorisierten Inhabers, d.h. in diesem Fall des Benutzers 12. Die Entschlüsselung kann direkt im Kartenlesegerät selbst erfolgen, wie im Stand der Technik üblich. Smartcards haben den Vorteil, dass sie eine grössere Sicherheit vor Betrug durch eine zusätzliche Verschlüsselung der PIN erlauben. Diese Verschlüsselung kann entweder durch einen dynamischen Zahlenschlüssel, welcher z.B. Zeit, Tag oder Monat enthält oder einen anderen Algorithmus erfolgen. Die Entschlüsselung und Identifikation geschieht nicht im Gerät selbst, sondern extern über das Identifikationsmodul. Eine weitere Möglichkeit bildet eine direkt in die Kommunikationsvorrichtung 111/112/113 eingeführte Chipkarte. Bei der Chipkarte kann es sich z.B. um SIM-Karten (Subscriber Identification Module) oder Smart-Cards handeln, wobei den Chipkarten jeweils eine Rufnummer zugeordnet ist. Die Zuordnung kann z.B. über ein HLR (Home Location Register) erfolgen, indem im HRL die IMSI (International Mobile Subscriber Identification) einer Rufnummer z.B. einer MSISDN (Mobile Subscriber ISDN) zugeordnet abgespeichert ist. Über diese Zuordnung ist dann eine eindeutige Identifikation des Benutzers 12 möglich.

Um eine Suchabfrage zu starten, übermittelt z.B. ein Benutzer 12 über ein Front-End ein Search-Request für die entsprechende Abfrage von der Kommunikationsvorrichtung 111/112/113 über das Netzwerk 50 an die Recheneinheit. Die Search-Request-Daten können über Eingabeelemente der Kommunikationsvorrichtung 111/112/113 eingegeben werden. Die Eingabeelemente können z.B. Tastaturen, graphische Eingabemittel (Maus, Trackball, Eyetracker bei Virtual Retinal Display (VRD) etc.), aber auch IVR (Interactive Voice Response) etc. umfassen. Der Benutzer 12 hat die Möglichkeit, mindestens einen Teil der Search-Request-Daten selber zu bestimmen. Dies kann z.B. dadurch geschehen, dass der Benutzer durch die Empfangsvorrichtung 111/112/113 aufgefordert wird, ein entsprechendes Front-End-Query über ein Interface auszufüllen. Das Front-End-Query kann insbesondere eine zusätzliche Authentifikation und/oder Gebühren für die Abfrage umfassen. In der Recheneinheit 10 werden die Search-Request-Daten überprüft und, falls sie bestimmbaren Kriterien genügen, wird die Suche ausgeführt. Um eine möglichst gute Aktualität der Daten zu erhalten oder um eine permanente Überwachung des Netzes zu erreichen, können z.B. die Stimmungsgrössen 21 mittels der Recheneinheit 10 periodisch überprüft werden und falls mindestens eine der Stimmungsgrössen 21 ausserhalb einer festlegbaren Schwankungstoleranz oder eines bestimmbaren Erwartungswertes liegt, die entsprechende Wertungsliste 330,331,332 mit den gefundenen Datensätzen und/oder Verweisen auf gefundene Datensätze im Contentmodul 60 der Recheneinheit 10 für einen Benutzer zugreifbar abgespeichert und/oder aktualisiert werden. Für benutzerspezifische Anforderungen kann es sinnvoll sein, dass z.B. ein Benutzerprofil anhand von Benutzerinformationen erstellt wird, wobei z.B. basierend auf den im Contentmodul 60 abgespeicherten gefundenen Datensätzen und/oder Verweisen auf gefundene Datensätze mittels eines Repackagingmoduls 61 unter Berücksichtigung der Daten des Benutzerprofils benutzerspezifisch optimierte Daten erzeugt werden. Die benutzerspezifisch optimierten Daten können dann z.B. dem Benutzer 12 im Contentmodul 60 der Recheneinheit 10 abgespeichert zur Verfügung gestellt werden. Es kann vorteilhaft sein, dass einem Benutzer 12 verschiedene Benutzerprofile für unterschiedliche Kommunikationsvorrichtungen 111,112,113 dieses Benutzers 12 zugeordnet abgespeichert werden. Für das Benutzerprofil können z.B. auch Daten zum Benutzerverhalten von der Recheneinheit 10 automatisch erfasst und dem Benutzerprofil zugeordnet abgespeichert werden.

Es ist wichtig darauf hinzuweisen, dass als Ausführungsvariante mittels eines Historymoduls 22 zu jeder berechneten variablen Stimmungsgrösse 21 die Werte bis zu einem festlegbaren vergangenen Zeitpunkt abgespeichert werden können. Dies erlaubt, dass z.B. die Recheneinheit 10 mittels eines Extrapolationsmoduls 23 Erwartungswerte zu einer bestimmbaren Stimmungsgrösse 21 basierend auf den Daten des Historymoduls 22 für einen bestimmbaren zukünftigen Zeitpunkt berechet und in einem Datenspeicher der Recheneinheit 10 abspeichert. Der Benutzer 12 kann damit nicht nur über aktuelle Stimmungsschwankungen oder Stimmungsveränderungen informiert werden, sondern er kann auch auf Erwartungswerte für zukünftiges Verhalten der Benutzer des Netzwerkes zugreifen und sich entsprechend einstellen.

Weiter ist es wichtig zu erwähnen, dass die topologische Navigationsmap als Topic-Map bereits Informationen d.h. Resultate umfasst auch ohne weitere Benutzung zur Navigation innerhalb der erfassten Daten umfasst - nämlich z.B. welche Hauptthemen sich in den untersuchten Dokumenten finden. Eine solche automatisierte Themenauswertung ist als solche im Stand der Technik nirgends bekannt. Für die Erzeugung einer topologischen Navigationsmap oder Topic-Map können z.B. n Dokumente mittels des Systems analysiert und die relevanten Keywords als Suchbegriffe und/oder Wertungsbegriffe extrahiert werden. Die Relevanz kann man auf unterschiedlichste Arten messen, z.B. indem die Suchbegriffe und/oder Wertungsbegriffe herausgenommen werden, welche überproportional in den Texten vorkommen relativ zu einem grossen Korpus mit Standard Texten.

## Patentansprüche

1. Verfahren zur benutzergesteuerten multidimensionalen Navigation in Multimediadaten, **dadurch gekennzeichnet,**
**dass** eine Vielzahl von Knotenelementen (1) einer topologischen Navigationsmap (4) generiert werden und/oder aus zu erfassenden Multimediadaten extrahiert werden, wobei ein Knotenelement (1) einen oder mehrere verknüpfbare, extrahierte und/oder generierte Suchbegriffe und/oder Wertungsbegriffe umfasst,
**dass** zu jedem mittels des Systems zu erfassenden Multimediadatenelement ein Relevanzindexparameter für jede paarweise Knotenelementkombination bestimmt und dem jeweiligen Knotenelementpaar zugeordnet wird,
**dass** in Abhängigkeit der Relevanzindexparameter ein- oder mehrdimensionale Distanzfaktoren bestimmt werden, wobei mit zunehmender Relevanz zweier paarweiser Multimediadatenelemente zueinander der Betrag des entsprechenden Distanzfaktor zwischen dem jeweiligen Knotenelementpaar kleiner wird,
**dass** basierend auf den erfassten Multimediadatenelemente und/oder Knotenelemente in Abhängigkeit der jeweilig ein- oder mehrdimensionalen Distanzfaktoren die topologische Navigationsmap (4) mittels der Knotenelemente (1) generiert und graphisch dargestellt wird, und
**dass** der Benutzer mittels Eingabevorrichtung in der topologischen Navigationsmap (4) navigiert und auf gewünschte Multimediadatenelemente und/oder Knotenelemente (1) zugreift, wobei auf benutzerspezifische Selektion eines initiierenden Knotenelementes (5) und/oder Multimediadatenelementes und/oder entstandenen Cluster (2) von Knotenelementen (1) und/oder Multimediadatenelementen die topologische Navigationsmap (4) bezüglich dieses initiierenden Knotenelementes (5) und/oder Multimediadatenelements und/oder Clusters (2) perspektivisch korrigiert und für den Benutzer zugreifbar dargestellt wird.

2. Verfahren nach Anspruch 1, **dadurch gekennzeichnet, dass** der Benutzer mittels topographische Eingabevorrichtung mit mindestens einem graphischen, zweidimensionalen Eingabeelement zwischen Knotenelemente (1) und/oder Multimediadatenelementen und/oder entstandenen Cluster (2) von Knotenelementen (1) und/oder Multimediadatenelementen mittels Selektion navigiert.

3. Verfahren nach einem der Ansprüche 1 bis 2, **dadurch gekennzeichnet, dass** die Distanzfaktoren mittels einem Federmodel-Modul bestimmt werden.

4. Verfahren nach einem der Ansprüche 1 bis 3, **dadurch gekennzeichnet, dass** die Distanzfaktoren mittels eines Maximum-Entropiemodul bestimmt werden.

5. Verfahren nach einem der Ansprüche 1 bis 4, **dadurch gekennzeichnet, dass** die Relevanzindexparameter und/oder Distanzfaktoren mittels des Systems dynamisch basierend auf der Selektion eines Knotenelementes (1) und/oder Multimediadatenelementes generiert und/oder bestimmt wird.

6. Verfahren nach einem der Ansprüche 1 bis 5, **dadurch gekennzeichnet, dass** das Knotenelement (1), basierend auf welchem die erste Darstellung der Navigationsmap (4) generiert wird, mittels Selektion eines oder mehreren Suchbegriffen durch den Benutzer und/oder anderweitig benutzerspezifisch erfolgt.

7. Verfahren nach einem der Ansprüche 1 bis 6, **dadurch gekennzeichnet, dass** die Relevanzindexparameter entsprechend der Häufigkeit der Suchbegriffe und/oder Wertungsbegriffe in einer paarweisen Knotenelementkombination bestimmt wird.

8. Verfahren nach einem der Ansprüche 1 bis 7, **dadurch gekennzeichnet, dass** in einem Datenspeicher (31) ein oder mehrere verknüpfbare Suchbegriffe (310,311,312,313) abgespeichert werden, eine Recheneinheit (10) über ein Netzwerk (50) auf mit Quelldatenbanken (401,411,421,431) verbundene Netzwerknodes (40,41,42,43) zugreift und Daten der Quelldatenbanken (401,411,421,431) basierend auf den Suchbegriffen (310,311,312,313) selektiert werden, dass in einem Datenspeicher (32) mindestens ein Wertungsparameter (320,321,322) einem Suchbegriff (310,311,312,313) und/oder einer Verknüpfung von Suchbegriffen (310,311,312,313) zugeordnet abgespeichert wird, dass mittels eines Filtermoduls (30) der Recheneinheit (10) auf eine Vielzahl von Quelldatenbanken (401,411,421,431) der Netzwerknodes (40,41,42,43) zugegriffen wird und für jeden Wertungsparameter (320,321,322) in Verbindung mit den zugeordneten Suchbegriffen (310,311,312,313) eine Wertungsliste (330,331,332) mit gefundenen Datensätzen erzeugt wird, wobei jedem der gefundenen Datensätze mindestens ein Quelldatenbanktyp und/oder eine Zeitangabe des Auftretens der Dokumente in der Quelldatenbank (401/411,421,431) und/oder Ortsangaben der Quelldatenbank (401,411,421,431) zugeordnet abgespeichert wird, und dass mittels eines Parametrisierungsmoduls (20) basierend auf der Wertungsliste (330,331,332), den zugeordneten Quelldatenbankentypen und/oder der Zeitangabe und/oder Ortsangabe für den jeweiligen Wertungsparameter (320,321,322) eine oder mehrere variable Stimmungsgrössen (21) mindestens teilweise dynamisch generiert wird, welche variable Stimmungsgrösse (21) zeitlichen Stimmungsschwankungen von Benutzern des Netzwerkes (50) entsprechen, wobei die extrahierten Suchbegriffe und/oder Wertungsbegriffe und/oder Knotenelemente mindestens die Stimmungsgrössen (21) umfassen.

9. Verfahren nach Anspruch 8, **dadurch gekennzeichnet, dass** die Wertungsliste (330,331,332) mit den gefundenen Datensätzen und/oder Verweisen auf gefundene Datensätze in einem Contentmodul (60) der Recheneinheit (10) für einen Benutzer zugreifbar abgespeichert wird.

10. Verfahren nach einem der Ansprüche 8 oder 9, **dadurch gekennzeichnet, dass** periodisch die Stimmungsgrössen (21) mittels der Recheneinheit (10) überprüft werden und, falls mindestens eine der Stimmungsgrössen (21) ausserhalb einer festlegbaren Schwankungstoleranz oder eines bestimmbaren Erwartungswertes liegt, die entsprechende Wertungsliste (330,331,332) mit den gefundenen Datensätzen und/oder Verweisen auf gefundene Datensätze im Contentmodul (60) der Recheneinheit (10) für einen Benutzer zugreifbar abgespeichert und/oder aktualisiert werden.

11. Verfahren nach einem der Ansprüche 8 bis 10, **dadurch gekennzeichnet, dass** ein oder mehrere der Wertungsparameter (320,321,322) mittels einer lexikographischen Wertungsdatenbank generiert werden.

12. Verfahren nach einem der Ansprüche 8 bis 12, **dadurch gekennzeichnet, dass** ein oder mehrere der Wertungsparameter (320,321,322) dynamisch mittels der Recheneinheit (10) während der Erzeugung der Wertungsliste (330,331,332) generiert werden.

13. Verfahren nach einem der Ansprüche 8 bis 12, **dadurch gekennzeichnet, dass** zur Generierung der variablen Stimmungsgrössen (21) und/oder der Daten des Contentmoduls (60) HTML und/oder HDML und/oder WML und/oder VRML und/oder ASD verwendet werden.

14. Verfahren nach einem der Ansprüche 8 bis 13, **dadurch gekennzeichnet, dass** ein Benutzerprofil anhand von Benutzerinformationen erstellt wird, wobei basierend auf den im Contentmodul (60) abgespeicherten gefundenen Datensätzen und/oder Verweisen auf gefundene Datensätze mittels eines Repackagingmoduls (61) unter Berücksichtigung der Daten des Benutzerprofils benutzerspezifisch optimierte Daten erzeugt werden, welche benutzerspezifisch optimierten Daten dem Benutzer (12) im Contentmodul (60) der Recheneinheit (10) abgespeichert zur Verfügung gestellt werden.

15. Verfahren nach Anspruch 14, **dadurch gekennzeichnet, dass** dem Benutzer (12) verschiedene Benutzerprofile für unterschiedliche Kommunikationsvorrichtungen (111,112,113) des Benutzers (12) zugeordnet abgespeichert werden.

16. Verfahren nach einem der Ansprüche 14 oder 15, **dadurch gekennzeichnet, dass** Daten zum Benutzerverhalten von der Recheneinheit (10) automatisch erfasst und dem Benutzerprofil zugeordnet abgespeichert werden.

17. Verfahren nach einem der Ansprüche 8 bis 16, **dadurch gekennzeichnet, dass** mittels eines Historymoduls (22) zu jeder berechneten variablen Stimmungsgrösse (21) die Werte bis zu einem festlegbaren vergangenen Zeitpunkt abgespeichert werden.

18. Verfahren nach Anspruch 17, **dadurch gekennzeichnet, dass** die Recheneinheit (10) mittels eines Extrapolationsmoduls (23) Erwartungswerte zu einer bestimmbaren Stimmungsgrösse (21) basierend auf den Daten des Historymoduls (22) für einen bestimmbaren zukünftigen Zeitpunkt berechnet und in einem Datenspeicher der Recheneinheit (10) abspeichert.

19. Verfahren nach einem der Ansprüche 8 bis 18, **dadurch gekennzeichnet, dass** die Quelldatenbanken unterschiedliche News-Groups und/oder Mail-Foren und/oder WWW-Server und/oder Chat-Server und/oder Journal-Server und/oder Themenboards und/oder fachspezifische Datenbanken umfassen.

20. Verfahren nach einem der Ansprüche 8 bis 19, **dadurch gekennzeichnet, dass** ein Überwachungsmodul basierend auf der variablen Stimmungsgrösse (21) auf ein bestimmbares Ereignis triggert, wobei der Trigger in Abhängigkeit des zeitlichen Verlaufs der Stimmungsgrösse (21) erfolgt.

21. System zur benutzergesteuerten multidimensionalen Navigation in Multimediadaten, **dadurch gekennzeichnet,**
**dass** eine topologische Navigationsmap eine Vielzahl von Knotenelemente (1) selektierbaren umfasst, wobei ein Knotenelement (1) einen oder mehrere verknüpfbare Suchbegriffe und/oder Wertungsbegriffe umfasst,
**dass** die Distanzen innerhalb der Navigationsmap in Abhängigkeit der Relevanzindexparameter basierend auf ein- oder mehrdimensionale Distanzfaktoren bestimmt ist, wobei mit zunehmender Relevanz zweier paarweiser Multimediadatenelemente zueinander der Betrag des entsprechenden Distanzfaktor zwischen dem jeweiligen Knotenelementpaar kleiner wird,
**dass** das System eine topologische Eingabevorrichtung umfasst, mittels welcher die topologischen Navigationsmap (4) für den Benutzer navigierbar ist und die gewünschten Multimediadatenelemente und/oder Knotenelemente (1) zugreifbar sind, wobei zur Navigation in der topologischen Navigationsmap für den Benutzer gewünschte Knotenelemente (1) und/oder Multimediadatenelemente und/oder entstandenen Cluster (2) von Knotenelementen (1) mittels der Eingabevorrichtung selektierbar und die topologische Navigationsmap (4) basierend auf der Selektion mittels des System perspektivisch korrigierbar und neu darstellbar sind.

22. System nach Anspruch 21, **dadurch gekennzeichnet, dass** die Navigationsmap mittels topographischer Eingabevorrichtung mit mindestens einem graphischem, zweidimensionalen Eingabeelement für den Benutzer zwischen Knotenelementen (1) und/oder Multimediadatenelementen und/oder entsptandenen Cluster (2) von Knotenelementen (1) und/oder Multimediadatenelementen mittels Selektion navigierbar ist.

23. System nach einem der Ansprüche 21 oder 22, **dadurch gekennzeichnet, dass** das System ein Federmodel-Modul zum Bestimmen der Distanzfaktoren umfasst.

24. System nach einem der Ansprüche 21 bis 23, **dadurch gekennzeichnet, dass** das System ein Maximum-Entropiemodul zum Bestimmen der Distanzfaktoren umfasst.

25. System nach einem der Ansprüche 21 bis 24, **dadurch gekennzeichnet, dass** die Relevanzindexparameter und/oder Distanzfaktoren mittels des Systems dynamisch basierend auf der Selektion eines Knotenelementes (1) und/oder Multimediadatenelementes generiert und/oder bestimmbar sind.

26. System nach einem der Ansprüche 21 bis 25, **dadurch gekennzeichnet, dass** das Knotenelement (1), basierend auf welchem die erste Darstellung der Navigationsmap (4) generiert ist, mittels Selektion eines oder mehreren Suchbegriffen durch den Benutzer und/oder anderweitig benutzerspezifisch erfolgt.

27. Computerprogrammprodukt, welches in den internen Speicher eines digitalen Computers ladbar ist und Softwarecodeabschnitte umfasst, mit denen die Schritte gemäss einem der Ansprüche 1 bis 20 durchführbar sind, wenn das Produkt auf einem Computer läuft.

## Claims

1. A method for user-controlled, multi-dimensional navigation in multimedia data, **characterized in**
**that** a plurality of node elements (1) of a topological navigation map (4) are generated and/or are extracted from multimedia data to be recorded, wherein a node element (1) comprises one or a more of interconnectable, extracted and/or generated search terms and/or weighting terms,
**that** for each multimedia element to be recorded by means of the system, a relevance index parameter is determined for each paired node element combination and is assigned to the respective node element pair,
**that** depending on the relevance index parameters, one-dimensional or multi-dimensional distance factors are determined, wherein with increasing relevance of two paired multimedia data elements to each other, the value of the respective distance factor between the respective node element pair becomes smaller,
**that** based on the recorded multimedia elements and/or node elements, the topological navigation map (4) is generated by means of the node elements (1) as a function of the respective one-dimensional or multi-dimensional distance factors and is displayed graphically, and
**that** the user navigates in the topological navigation map (4) by means of an input device and accesses desired multimedia elements and/or node elements (1), wherein upon user-specific selection of an initiating node element (5) and/or multimedia data element and/or generated cluster (2) of node elements (1) and/or multimedia data elements, the topological navigation map (4) can be perspectively corrected with respect to said initiating node element (5) and/or multimedia data element and/or cluster (2) and is displayed for the user in an accessible manner.

2. The method according to claim 1, **characterized in that** the user navigates by means of a topographic input device with at least one graphic, two-dimensional input element between node elements (1) and/or multimedia elements and/or generated clusters (2) of node elements (1) and/or multimedia data elements by means of selection.

3. The method according to any one of the claims 1 to 2, **characterized in that** the distance factors are determined by means of a spring model module.

4. The method according to any one of the claims 1 to 3, **characterized in that** the distance factors are determined by means of a maximum entropy module.

5. The method according to any one of the claims 1 to 4, **characterized in that** the relevance index parameters and/or distance factors are dynamically generated and/or determined by means of the system and are based on the selection of a node element (1) and/or multimedia data element.

6. The method according to any one of the claims 1 to 5, **characterized in that** the node element (1), based on which the first display of the navigation map (4) is generated, is carried out in a user-specific manner by the user and/or in a different way by means of selection of one or more search terms.

7. The method according to any one of the claims 1 to 6, **characterized in that** the relevance index parameters are determined corresponding to the frequency of the search terms and/or weighting terms in a paired node element combination.

8. The method according to any one of the claims 1 to 7, **characterized in that** in a data storage (31), one or more interconnectable search terms (310, 311, 312, 313) are stored, a processing unit (10) accesses via a network (50) network nodes (40, 41, 42, 43) which are connected to source databases (401, 411, 421, 431) and data of the source databases (401, 411, 421, 431) are selected based on the search terms (310, 311, 312, 313), that in a data storage (32) at least one weighting parameter (320, 321, 322) is assigned to a search term (310, 311, 312, 313) and/or an interconnection of search terms (310, 311, 312, 313) and is stored, that by means of a filter module (30) of the processing unit (10), a plurality of source databases (401, 411, 421, 431) of the network nodes (40, 41, 42, 43) is accessed and for each weighting parameter (320, 321, 322), in connection with the assigned search terms (310, 311, 312, 313), a weighting list (330, 331, 332) with found datasets is generated, wherein to each of the found datasets, at least one source database type and/or a time indication of the occurrence of the documents in the source database (401/411, 421, 431) and/or location information of the source database (401, 411, 421, 431) is assigned and is stored, and that by means of a parameterization module (20) and based on the weighting list (330, 331, 332), the assigned source database types, and/or the time indication and/or location information, one or more variable mood values (21) is at least partially dynamically generated for the respective weighting parameter (320, 321, 322), which variable mood values (21) correspond to temporal mood fluctuations of users of the network (50), wherein the extracted search terms and/or weighting terms and/or node elements comprise at least the mood values (21).

9. The method according to claim 8, **characterized in that** the weighting list (330, 331, 332) with the found datasets and/or references to found datasets is stored in a content module (60) of the processing unit (10) in a manner accessible for the user.

10. The method according to claim 8 or claim 9, **characterized in that** the mood values (21) are periodically checked by means of the processing unit (10) and, if at least one of the mood values (21) lies outside of a definable fluctuation tolerance or a determinable expectation value, the respective weighting list (330, 331, 332) with the found datasets and/or references to found datasets is stored in the content module (60) of the processing unit (10) in a manner accessible for a user and/or is updated.

11. The method according to any one of the claims 8 to 10, **characterized in that** one or more of the weighting parameters (320, 321, 322) are generated by means of a lexicographical weighting database.

12. The method according to any one of the claims 8 to 12, **characterized in that** one or more of the weighting parameters (320, 321, 322) is dynamically generated by means of the processing unit (10) during the generation of the weighting list (330, 331, 331).

13. The method according to any one of the claims 8 to 12, **characterized in that** for generating the variable mood values (21) and/or the data of the content module (60), HTML and/or HDML and/or WML and/or VRML and/or ASD are used.

14. The method according to any one of the claims 8 to 13, **characterized in that** a user profile is prepared based on user information, wherein on the basis of the found datasets and/or references to found datasets stored in the content module (60), user-specifically optimized data are generated under consideration of the user profile by means of a repackaging module (61), which user-specifically optimized data are stored in the content module (60) of the processing unit (10) and available for the user (12).

15. The method according to claim 14, **characterized in that** different user profiles for different communication devices (111, 112, 113) of the user (12) are assigned to the user (12) and stored.

16. The method according to claim 14 or claim 15, **characterized in that** data on user behavior are automatically recorded by the processing unit (10) and are assigned to the user profile and stored.

17. The method according to any one of the claims 8 to 16, **characterized in that** by means of a history module (22), for each calculated variable mood value (21), the values can be stored up to a definable point in time in the past.

18. The method according to claim 17, **characterized in that** by means of an extrapolation module (23) and based on the data of the history module (22), the processing unit (10) calculates expectation values for a determinable mood value (21) for a determinable point in time in the future and stores said expectation values in a data storage of the processing unit (10).

19. The method according to any one of the claims 8 to 18, **characterized in that** the source databases comprise different news groups and/or mail forums, and/or WWW servers, and/or chat servers, and/or journal servers, and/or discussion boards and/or subject-specific databases.

20. The method according to any one of the claims 8 to 19, **characterized in that** a monitoring module triggers based on the variable mood value (21) upon occurrence of a determinable event, wherein triggering takes place depending on the chronological course of the mood value (21).

21. A system for user-controlled, multi-dimensional navigation in multimedia data, **characterized in**
**that** a topological navigation map comprises a plurality of selectable node elements (1), wherein a node element (1) comprises one or more interconnectable search terms and/or weighting terms,
**that** the distances within the navigation map are determined depending on the relevance index parameters and based on one- or multi-dimensional distance factors, wherein with increasing relevance of two paired multimedia data elements to each other, the value of the respective distance factor between the respective node element pair becomes smaller,
**that** the system comprises a topological input device by means of which the topological navigation map (4) is navigable for the user and the desired multimedia data elements and/or node elements (1) are accessible, wherein for navigating in the topological navigation map, desired node elements (1) and/or multimedia data elements and/or generated cluster (2) of node elements (1) are selectable for the user by means of the input device and based on the selection, the topological navigation map (4) can be perspectively corrected and re-displayed by means of the system.

22. The system according to claim 21, **characterized in that** by means of a topographical input device with at least one graphic, two-dimensional input element, the navigation map is navigable for the user between node elements (1) and/or multimedia data elements and/or generated clusters (2) of node elements (1) and/or multimedia data elements by means of selection.

23. The system according to claim 21 or claim 22, **characterized in that** the system comprises a spring model module for determining the distance factors.

24. The system according to any one of the claims 21 to 23, **characterized in that** the system comprises a maximum entropy module for determining the distance factors.

25. The system according to any one of the claims 21 to 24, **characterized in that** the relevance index parameters and/or distance factors are dynamically generated and/or determinable by means of the system and are based on the selection of a node element (1) and/or multimedia data element.

26. The system according to any one of the claims 21 to 25, **characterized in that** the node element (1), based on which the first display of the navigation map (4) is generated, is carried out in a user-specific manner by the user and/or in a different way by means of selection of one or more search terms.

27. A computer program product which can be loaded into the internal storage of a digital computer and comprises software code sections by means of which the steps according to any one of the claims 1 to 20 can be carried out when the product runs on a computer.

## Revendications

1. Procédé de navigation multidimensionnelle, commandée par l'utilisateur, dans des données multimédia, **caractérisé**
**en ce qu'**une pluralité d'éléments de noeud (1) d'une carte de navigation topologique (4) sont générés et/ou sont extraits de données multimédia à saisir, un élément de noeud (1) comprenant un ou plusieurs termes de recherche et/ou termes d'estimation associables, extraits et/ou générés,
**en ce qu'**un paramètre d'indice de pertinence pour chaque combinaison de paires d'éléments de noeud est déterminé pour chaque élément de données multimédia à saisir par le système et est associé à la paire d'éléments de noeud respectifs,
**en ce que** des facteurs de distance unidimensionnels ou pluridimensionnels sont déterminés en fonction des paramètres d'indice de pertinence, la valeur du facteur de distance correspondant entre les paires d'éléments de noeud respectifs se réduisant au fur et à mesure que la pertinence de deux paires d'éléments de données multimédia augmente,
**en ce que** la carte de navigation topologique (4) est générée au moyen des éléments de noeud (1) et représentée graphiquement en se basant sur les éléments de données multimédia et/ou éléments de noeud saisis en fonction des facteurs de distance respectivement unidimensionnels ou pluridimensionnels et
**en ce que** l'utilisateur navigue au moyen du dispositif d'entrée dans la carte de navigation topologique (4) et a recours à des éléments de données multimédia et/ou des éléments de noeud (1) souhaités, à l'occasion de quoi la carte de navigation topologique (4) concernant cet élément de noeud (5) initiateur et/ou élément de données multimédia et/ou cluster (2) est corrigée en perspective sur la base d'une sélection spécifique à l'utilisateur d'un élément de noeud (5) initiateur et/ou d'un élément de données multimédia et/ou d'un cluster (2) généré d'éléments de noeud (1) et/ou d'éléments de données multimédia et est représentée de façon accessible pour l'utilisateur.

2. Procédé selon la revendication 1, **caractérisé en ce que** l'utilisateur navigue par sélection au moyen d'un dispositif d'entrée topographique comprenant au moins un élément d'entrée graphique et bidimensionnel entre des éléments de noeud (1) et/ou des éléments de données multimédia et/ou un cluster (2) généré d'éléments de noeud (1) et/ou d'éléments de données multimédia.

3. Procédé selon l'une des revendications 1 à 2, **caractérisé en ce que** les facteurs de distance sont déterminés au moyen d'un module de modèle à ressort.

4. Procédé selon l'une des revendications 1 à 3, **caractérisé en ce que** les facteurs de distance sont déterminés au moyen d'un module d'entropie maximum.

5. Procédé selon l'une des revendications 1 à 4, **caractérisé en ce que** les paramètres d'indice de pertinence et/ou facteurs de distance sont générés et/ou déterminés au moyen du système de façon dynamique sur la base de la sélection d'un élément de noeud (1) et/ou d'un élément de données multimédia.

6. Procédé selon l'une des revendications 1 à 5, **caractérisé en ce que** l'élément de noeud (1), sur la base duquel la première représentation de la carte de navigation (4) est générée, est déterminé par sélection d'un ou de plusieurs termes de recherche par l'utilisateur et/ou autrement de façon spécifique à l'utilisateur.

7. Procédé selon l'une des revendications 1 à 6, **caractérisé en ce que** les paramètres d'indice de pertinence sont déterminés en fonction de la fréquence des termes de recherche et/ou des termes d'évaluation dans une combinaison de paires d'éléments de noeud.

8. Procédé selon l'une des revendications 1 à 7, **caractérisé en ce qu'**un ou plusieurs termes de recherche (310, 311, 312, 313) associables sont stockés dans une mémoire de données (31), une unité de calcul (10) accède par un réseau (50) à des noeuds de réseau (40, 41, 42, 43) reliés à des banques de données source (401, 411, 421, 431) et des données des banques de données source (401, 411, 421, 431) sont sélectionnées sur la base des termes de recherche (310, 311, 312, 313), **en ce qu'**au moins un paramètre d'estimation (320, 321, 322) est stocké dans une mémoire de données (32), attribué à un terme de recherche (310, 311, 312, 313) et/ou une association de termes de recherche (310, 311, 312, 313), **en ce qu'**on a accès au moyen d'un module filtre (30) de l'unité de calcul (10) à une pluralité de banques de données source (401, 411, 421, 431) des noeuds de réseau (40, 41, 42, 43) et **en ce que**, pour chaque paramètre d'estimation (320, 321, 322), une liste d'estimation (330, 331, 332) avec des ensembles de données trouvés est générée en liaison avec les termes de recherche (310, 311, 312, 313) associés, au moins un type de banque de données source et/ou une indication de temps de l'apparition des documents dans la banque de données source (401/411, 421, 431) et/ou des indications de lieu de la banque de données source (401, 411, 421, 431), attribués à chacun des ensembles de données trouvés, étant mémorisés, et **en ce qu'** au moyen d'un module de paramétrage (20) et sur la base de la liste d'estimation (330, 331, 332), des types de banque de données source attribués et/ou de l'indication de temps et/ou de l'indication de lieu pour le paramètre d'estimation (320, 321, 322) respectif, une ou plusieurs grandeurs d'ambiance (21) variables sont générées au moins en partie de façon dynamique au moyen d'un module de paramétrage (20), lesquelles grandeurs d'ambiance (21) variables correspondent à des variations d'ambiance dans le temps d'utilisateurs du réseau (50), les termes de recherche et/ou les termes d'estimation et/ou les éléments de noeud extraits comprenant au moins les grandeurs d'ambiance (21).

9. Procédé selon la revendication 8, **caractérisé en ce que** la liste d'évaluation (330, 331, 332) avec les ensembles de données trouvés et/ou des renvois à des ensembles de données trouvés est mémorisée dans un module de contenu (60) de l'unité de calcul (10) de façon accessible pour un utilisateur.

10. Procédé selon l'une des revendications 8 ou 9, **caractérisé en ce que** les grandeurs d'ambiance (21) ont été contrôlées de façon périodique au moyen de l'unité de calcul (10) et, si au moins l'une des grandeurs d'ambiance (21) se situe en dehors d'une tolérance de variation définissable ou d'une valeur empirique déterminable, la liste d'estimation (330, 331, 332) correspondante avec les ensembles de données trouvés et/ou des renvois à des ensembles de données trouvés sont mémorisés et/ou actualisés dans le module de contenu (60) de l'unité de calcul (10) de façon accessible pour un utilisateur.

11. Procédé selon l'une des revendications 8 à 10, **caractérisé en ce qu'**un ou plusieurs des paramètres d'estimation (320, 321, 322) sont générés au moyen d'une banque de données d'estimation lexicographique.

12. Procédé selon l'une des revendications 8 à 12, **caractérisé en ce qu'**un ou plusieurs des paramètres d'estimation (320, 321, 322) sont générés de façon dynamique au moyen de l'unité de calcul (10) pendant la génération de la liste d'estimation (330, 331, 332).

13. Procédé selon l'une des revendications 8 à 12, **caractérisé en ce que** des HTML et/ou HDML et/ou WML et/ou VRML et/ou ASD sont utilisés pour générer les grandeurs d'ambiance (21) variables et/ou les données du module de contenu (60).

14. Procédé selon l'une des revendications 8 à 13, **caractérisé en ce qu'**un profil d'utilisateur est établi à l'aide d'informations d'utilisateur, des données optimisées de façon spécifique à l'utilisateur étant générées sur la base des ensembles de données trouvés et stockés dans le module de contenu (60) et/ou des renvois à des ensembles de données trouvés au moyen d'un module de réintégration (61) compte tenu des données du profil d'utilisateur, lesquelles données optimisées de façon spécifique à l'utilisateur sont mises à la disposition de l'utilisateur (12) de façon stockée dans le module de contenu (60) de l'unité de calcul (10).

15. Procédé selon la revendication 14, **caractérisé en ce que** différents profils d'utilisateur pour différents dispositifs de communication (111, 112, 113) de l'utilisateur (12) sont stockés de façon attribuée à l'utilisateur (12).

16. Procédé selon l'une des revendications 14 ou 15, **caractérisé en ce que** des données concernant le comportement d'utilisateur sont saisies de façon automatique par l'unité de calcul (10) et sont stockées de façon attribuée au profil d'utilisateur.

17. Procédé selon l'une des revendications 8 à 16, **caractérisé en ce que** les valeurs jusqu'à un moment antérieur définissable sont stockées au moyen d'un module d'historique (22) pour chaque grandeur d'ambiance (21) variable calculée.

18. Procédé selon la revendication 17, **caractérisé en ce que** l'unité de calcul (10) calcule au moyen d'un module d'extrapolation (23) des valeurs empiriques pour une grandeur d'ambiance (21) déterminable sur la base des données du module d'historique (22) pour un moment futur définissable et les stocke dans une mémoire de données de l'unité de calcul (10).

19. Procédé selon l'une des revendications 8 à 18, **caractérisé en ce que** les banques de données source comprennent différents groupes d'information et/ou forums mails et/ou serveurs WWW et/ou serveurs de discussion et/ou serveurs de journal et/ou supports à thème et/ou banques de données spécifiques.

20. Procédé selon l'une des revendications 8 à 19, **caractérisé en ce qu'**un module de contrôle se déclenche sur la base de la grandeur d'ambiance (21) variable à la suite d'un événement définissable, l'élément déclencheur intervenant en fonction de l'évolution dans le temps de la grandeur d'ambiance (21).

21. Système de navigation pluridimensionnelle commandée par l'utilisateur dans des données multimédia, **caractérisé**
**en ce qu'**une carte de navigation topologique comprend une pluralité d'éléments de noeud (1) sélectionnables, un élément de noeud (1) comprenant un ou plusieurs termes de recherche et/ou termes d'estimation associables,
**en ce que** les distances à l'intérieur de la carte de navigation sont déterminées en fonction des paramètres d'indice de pertinence sur la base de facteurs de distance unidimensionnels ou pluridimensionnels, la valeur du facteur de distance correspondant entre les paires d'éléments de noeud respectifs diminuant avec l'augmentation de la pertinence de deux paires d'éléments de données multimédia l'un par rapport à l'autre,
**en ce que** le système comprend un dispositif d'entrée topologique, au moyen duquel la carte de navigation (4) topologique est navigable pour l'utilisateur et les éléments de données multimédia et/ou éléments de noeud (1) souhaités sont accessibles, des éléments de noeud (1) et/ou éléments de données multimédia souhaités pour l'utilisateur et/ou clusters (2) générés d'éléments de noeud (1) pouvant être sélectionnés au moyen du dispositif d'entrée pour la navigation dans la carte de navigation topologique et la carte de navigation (4) topologique pouvant être corrigée en perspective sur la base de la sélection au moyen du système et pouvant être représentée à nouveau.

22. Système selon la revendication 21, **caractérisé en ce que** la carte de navigation est navigable par sélection au moyen du dispositif d'entrée topographique comprenant au moins un élément d'entrée graphique et bidimensionnel pour l'utilisateur entre des éléments de noeud (1) et/ou des éléments de données multimédia et/ou des clusters (2) générés d'éléments de noeud (1) et/ou d'éléments de données multimédia.

23. Système selon l'une des revendications 21 ou 22, **caractérisé en ce que** le système comprend un module de modèle à ressort pour déterminer les facteurs de distance.

24. Système selon l'une des revendications 21 à 23, **caractérisé en ce que** le système comprend un module d'entropie maximum pour la détermination des facteurs de distance.

25. Système selon l'une des revendications 21 à 24, **caractérisé en ce que** les paramètres d'indice de pertinence et/ou les facteurs de distance sont générés et/ou peuvent être déterminés au moyen du système de façon dynamique sur la base de la sélection d'un élément de noeud (1) et/ou d'un élément de données multimédia.

26. Système selon l'une des revendications 21 à 25, **caractérisé en ce que** l'élément de noeud (1), sur la base duquel la première représentation de la carte de navigation (4) est générée, s'effectue par sélection d'un ou de plusieurs termes de recherche par l'utilisateur et/ou autrement de façon spécifique à l'utilisateur.

27. Produit de programme informatique, qui peut être chargé dans la mémoire interne d'un ordinateur numérique et comprend des parties de code de logiciel, avec lesquelles les étapes peuvent être effectuées selon l'une des revendications 1 à 20, lorsque le produit fonctionne sur un ordinateur.
